(19) Europäisches Patentamt
European Patent Office
Office européen des brevets

(11) **EP 4 373 212 A1**

(12) **EUROPEAN PATENT APPLICATION**
published in accordance with Art. 153(4) EPC

(43) Date of publication:
**22.05.2024 Bulletin 2024/21**

(21) Application number: **22842383.6**

(22) Date of filing: **08.07.2022**

(51) International Patent Classification (IPC):
**H05B 6/12** (2006.01)  **H05B 6/06** (2006.01)

(52) Cooperative Patent Classification (CPC):
**H05B 6/06; H05B 6/12; Y02B 40/00**

(86) International application number:
**PCT/KR2022/009961**

(87) International publication number:
**WO 2023/287121 (19.01.2023 Gazette 2023/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.07.2021 KR 20210093788**
**16.07.2021 KR 20210093789**

(71) Applicant: **LG Electronics Inc.**
**Yeongdeungpo-gu**
**Seoul 07336 (KR)**

(72) Inventors:
• **KIM, Sungkyu**
**Seoul 08592 (KR)**
• **LEE, Seonghun**
**Seoul 08592 (KR)**
• **KWAK, Bongsik**
**Seoul 08592 (KR)**
• **KIM, Hongkwon**
**Seoul 08592 (KR)**

(74) Representative: **Vossius & Partner**
**Patentanwälte Rechtsanwälte mbB**
**Siebertstrasse 3**
**81675 München (DE)**

(54) **SHIELD DEVICE, INDUCTION HEATING TYPE COOKTOP, AND INDUCTION HEATING TYPE COOKTOP SYSTEM INCLUDING SAME**

(57)    In order to minimize exposure to electromagnetic waves on a cooktop, the present disclosure provides an induction heating type cooktop including: an upper glass plate having a heating area, on which a cooking container is heated, formed thereon; a working coil which produces a first magnetic field to heat the cooking container; an inverter having a switching element driven to allow a current to flow through the working coil; and a shield circuit which produces a second magnetic field that cancels out the first magnetic field, wherein a shield coil is provided on the cooktop itself or a separate device distinguished from the cooktop is provided with a shield coil.

【Figure 7】

**EP 4 373 212 A1**

**Description**

[TECHNICAL FIELD]

The present disclosure relates to a shield device, an induction heating type cooktop, and an induction heating type cooktop system including the same.

[BACKGROUND ART]

Various types of cooking appliances are used to heat food at home or in the restaurant. According to the related art, a gas stove using gas as a fuel has been widely used. However, recently, devices for heating an object to be heated, for example, a cooking container such as a pot, have been spread using electricity instead of the gas.

A method for heating the object to be heated using electricity is largely divided into a resistance heating method and an induction heating method. The electrical resistance method is a method for heating an object to be heated by transferring heat generated when electric current flows through a metal resistance wire or a non-metal heating body such as silicon carbide to the object to be heated (e.g., a cooking container) through radiation or conduction. In the induction heating method, when high-frequency power having a predetermined intensity is applied to a coil, eddy current is generated in the object to be heated using magnetic fields generated around the coil so that the object to be heated is heated.

On the other hand, in the case of the induction heating method, a problem occurs in which a portion of a magnetic field generated from a coil does not reach a cooking container and is exposed to the outside. In particular, if the size of the cooking container is small or the heating intensity is strong, the problem of electromagnetic wave exposure may become greater.

[DISCLOSURE OF INVENTION]

[TECHNICAL PROBLEM]

The present disclosure provides a cooktop, in which electromagnetic wave exposure is minimized, and an operating method thereof.

The present disclosure provides a cooktop, in which an exposed magnetic field is used to heat a cooking container, and an operating method thereof.

The present disclosure provides a shield device for reducing electromagnetic wave exposure in a cooktop.

The present disclosure provides an induction heating type cooktop system including a cooktop and a shield device for reducing electromagnetic wave exposure in the cooktop.

The present disclosure aims to minimize a problem in that electromagnetic waves generated from a working coil is exposed to the outside.

The present disclosure provides a shield device for reducing electromagnetic waves generated from an induction heating type cooktop as an accessory in the form of a pad.

The present disclosure provides a shield device and an induction heating type cooktop system that provide additional functions through energy accumulation while reducing electromagnetic waves generated in an induction heating type cooktop.

[TECHNICAL SOLUTION]

An induction heating type cooktop according to an embodiment of the present disclosure may include an upper plate glass having a heating region formed so as to heat a cooking container, a working coil configured to generate a first magnetic field to heat the cooking container, an inverter comprising a switching element driven to allow a current to flow through the working coil, and a shield circuit configured to generate a second magnetic field to cancel out the first magnetic field.

The shield circuit may include a shield coil and a shield capacitor.

The shield circuit may further include a first switch configured to determine whether to operate in an electromagnetic wave reduction mode.

The first switch may be turned on or off at the zero crossing point.

The shield circuit may further include a second switch configured to determine whether to operate a heating power reinforcement mode, and a heating power reinforcement capacitor.

The shield capacitor and the heating power reinforcement capacitor may be connected in parallel, and the second switch may be connected between the shield capacitor and the heating power reinforcement capacitor.

The second switch may be turned off in a heating power enhancement mode and may be turned on in an electromagnetic wave reduction mode.

The second switch may be turned off when a size of the cooking container is larger than a preset reference size, and the second switch may be turned on when the size of the cooking container is smaller than the reference size.

The induction heating type cooktop may further include an output unit configured to output a notification when the size of the cooking container is smaller than or equal to the reference size and the cooking container is not aligned to the heating region.

A shield device used in an induction heating type cooktop including a working coil may include a case disposed on an upper portion the cooktop, and a shield coil disposed inside the case.

An induction heating type cooktop system may include a cooktop including a working coil and an upper plate glass having a heating region through which a magnetic field generated in the working coil passes, and a shield device disposed on the cooktop, wherein the shield device may include a case disposed on an upper portion the cooktop, and a shield coil disposed inside the case.

An inner diameter of the shield coil may be larger than an outer diameter of the working coil.

An inner diameter of the shield coil may be larger than a diameter of the heating region of the cooktop.

The case may be provided with a guide configured to guide a position of the shield device.

The shield device may further include an energy accumulation circuit having a shield capacitor connected to the shield coil.

[ADVANTAGEOUS EFFECTS]

According to an embodiment of the present disclosure, a magnetic field exposed to the outside is reduced, and thus, there is an advantage of minimizing the problem of harm to the human body caused by the exposed magnetic field.

According to an embodiment of the present disclosure, when a size of a cooking container is large, a shield coil for reducing a magnetic field generates a magnetic field that reaches the cooking container, thereby enhancing heating power and improving heating performance.

According to an embodiment of the present disclosure, electromagnetic waves are automatically reduced or heating power is increased, according to on the cooking container, thereby minimizing the risk of harm to the human body and increasing user convenience.

According to an embodiment of the present disclosure, since the exposed magnetic field is reduced, anxiety about human harmfulness can be alleviated and EMF stability can be secured.

According to an embodiment of the present disclosure, electromagnetic waves exposed to the outside through the shield device can be minimized, and thus, there is an advantage of minimizing the possibility of harm to the human body caused by the cooktop.

According to an embodiment of the present disclosure, electromagnetic wave exposure problems can be reduced simply by placing the cooktop on the upper plate glass, and thus, there is an advantage of providing a shield device that can be easily used.

According to an embodiment of the present disclosure, a pad-shaped shield device is provided as an accessory, and thus can be used on an existing cooktop. Since the shield device is not fixed, a user can selectively use it on any cooktop, which has an advantage of increasing versatility.

According to an embodiment of the present disclosure, the shield device can provide additional functions by accumulating energy, which has an advantage of increasing utilization.

According to an embodiment of the present disclosure, the position for maximizing the efficiency of the shield device is guided through the guide, and thus, there is an advantage of maximally reducing the exposed electromagnetic waves.

[BRIEF DESCRIPTION OF DRAWINGS]

FIG. 1 is a perspective view illustrating a cooking appliance and a cooking container according to an embodiment of the present disclosure.

FIG. 2 is a cross-sectional view illustrating the cooking appliance and the cooking container according to an embodiment of the present disclosure.

FIG. 3 is a circuit diagram of the cooktop according to an embodiment of the present disclosure.

FIG. 4 is a view illustrating output characteristics of the cooktop according to an embodiment of the present disclosure.

FIG. 5 is an exemplary diagram illustrating the structures of a working coil and a shield coil according to a first embodiment of the present disclosure.

FIG. 6 is a circuit diagram illustrating a working coil and a shield coil of a cooktop according to the first embodiment of the present disclosure.

FIG. 7 is a view illustrating a current and a magnetic field induced in each of the working coil and the shield coil of the cooktop according to the first embodiment of the present disclosure

FIG. 8 is a waveform illustrating a current flowing through the working coil and a current flowing through the shield coil in the cooktop according to the first embodiment of the present disclosure.

FIG. 9 is a view illustrating the magnitude of the magnetic field around the cooktop and the surrounding thereof according to the first embodiment of the present disclosure.

FIG. 10 is a circuit diagram of a shield circuit including a first switch according to the first embodiment of the present disclosure.

FIG. 11 is a voltage waveform for describing a point at which the first switch of the shield circuit according to the first embodiment of the present disclosure is turned on and off.

FIG. 12 is a circuit diagram of a shield circuit including a second switch and a heating power reinforcement capacitor according to the first embodiment of the present disclosure.

FIG. 13 is a view illustrating a shield circuit according to an operation mode, according to the first embodiment of the present disclosure.

FIG. 14 is a view illustrating current pulses of the working coil and the shield coil according to an operation mode, according to the first embodiment of the present disclosure.

FIG. 15 is a flowchart illustrating an operating method of a cooktop according to a first embodiment of the present disclosure.

FIG. 16 is a view illustrating voltage pulses in the working coil and shield coil when the cooking container is not present.

FIG. 17 is a diagram showing voltage pulses at each of the working coil and shield coil when a cooking container smaller than the standard size is aligned in the heating area.

FIG. 18 is a view illustrating voltage pulses in the working coil and the shield coil when the cooking container smaller than the reference size is misaligned in the heating region.

FIG. 19 is a view illustrating voltage pulses in the working coil and the shield coil when the cooking container larger than the reference size is aligned in the heating region.

FIG. 20 is a view illustrating a magnetic field distribution in a heating region when the cooktop according to the first embodiment of the present disclosure heats a cooking container smaller than a reference size.

FIG. 21 is a view illustrating a magnetic field distribution in a heating region when the cooktop according to the first embodiment of the present disclosure heats a cooking container larger than a reference size.

FIG. 22 is a view illustrating the magnitude of the magnetic field exposed to the outside from the cooktop according to the first embodiment of the present disclosure.

FIG. 23 is a view illustrating an induction heating type cooktop system according to a second embodiment of the present disclosure.

FIG. 24 is a graph showing currents flowing through a working coil and a shield coil according to the second embodiment of the present disclosure.

FIG. 25 is a cross-sectional view of a cooktop and a shield device according to the second embodiment of the present disclosure.

FIG. 26 is a plan view separately illustrating only a working coil and a shield coil in FIG. 25.

FIG. 27 is a cross-sectional view illustrating a shield device further including an energy accumulation circuit according to the second embodiment of the present disclosure.

FIG. 28 is a graph showing voltage of the shield capacitor and current flowing through the working coil and the shield coil according to the second embodiment of the present disclosure.

FIG. 29 is a view illustrating an energy accumulation circuit in detail according to the second embodiment of the present disclosure.

FIG. 30 is a view illustrating the configuration of the shield device according to the second embodiment of the present disclosure.

[BEST MODE FOR CARRYING OUT THE INVENTION]

Hereinafter, embodiments relating to the present disclosure will be described in detail with reference to the accompanying drawings. Furthermore, terms, such as a "module" ad a "unit", are used for convenience of description, and they do not have different meanings or functions in themselves.

Hereinafter, a cooktop and an operation method thereof according to an embodiment of the present disclosure will be described. Hereinafter, "cooking appliance" may mean an induction heating type cooktop, but is not limited thereto.

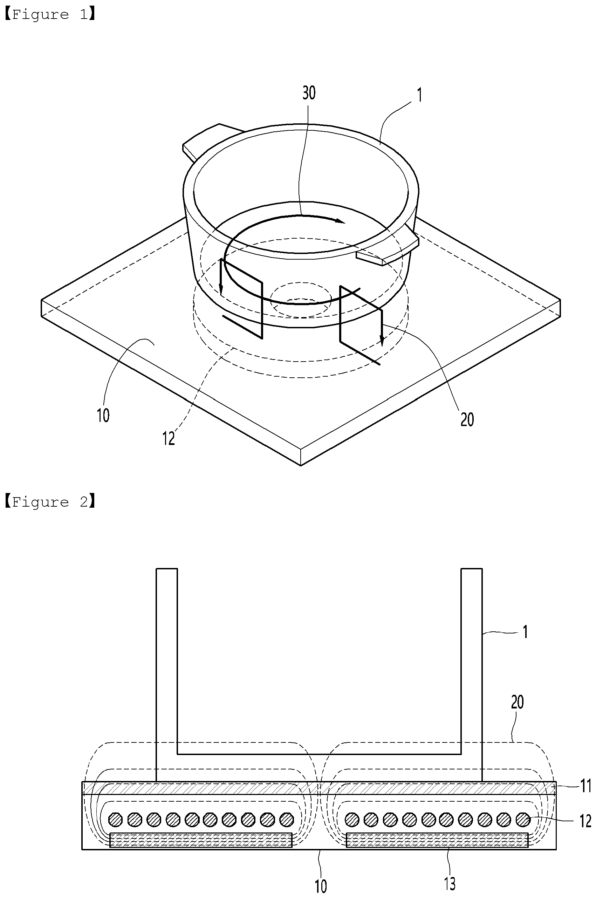

FIG. 1 is a perspective view illustrating a cooking appliance and a cooking container according to an embodiment of the present disclosure, and FIG. 2 is a cross-sectional view illustrating the cooking appliance and the cooking container according to an embodiment of the present disclosure.

A cooking container 1 may be disposed above the cooking appliance 10, and the cooking appliance 10 may heat a cooking container 1 disposed thereon.

First, a method for heating the cooking container 1 using the cooking appliance 10 will be described.

As illustrated in FIG. 1, the cooking appliance 10 may generate a magnetic field 20 so that at least a portion of the magnetic field 20 passes through the cooking container 1. Here, if an electrical resistance component is contained in a material of the cooking container 1, the magnetic field 20 may induce an eddy current 30 in the cooking container 1. Since the eddy current 30 generates heat in the cooking container 1 itself, and the heat is conducted or radiated up to the inside of the cooking container 1, contents of the cooking container 1 may be cooked.

When the material of the cooking container 1 does not contain the electrical resistance component, the eddy current 30 does not occur. Thus, in this case, the cooking appliance 10 may not heat the cooking container 1.

As a result, the cooking container 1 capable of being heated by the cooking appliance 10 may be a stainless steel vessel or a metal vessel such as an enamel or cast iron vessel.

Next, a method for generating the magnetic field 20 by the cooking appliance 10 will be described.

As illustrated in FIG. 2, the cooking appliance 10 may include at least one of an upper plate glass 11, a working coil 12, or a ferrite 13.

The upper plate glass 11 may support the cooking container 1. That is, the cooking container 1 may be placed on a top surface of the upper plate glass 11. A heating area in which the cooking container 1 is heated may be formed on the upper plate 11.

In addition, the upper plate glass 11 may be made of ceramic tempered glass obtained by synthesizing various mineral materials. Thus, the upper plate glass 11 may protect the cooking appliance 10 from an external impact.

In addition, the upper plate glass 11 may prevent foreign substances such as dust from being introduced into the cooking appliance 10.

The working coil 12 may be disposed below the upper plate glass 11. Current may or may not be supplied to the working coil 12 to generate the magnetic field 20. Specifically, the current may or may not flow through the working coil 12 according to on/off of an internal switching element of the cooking appliance 10.

When the current flows through the working coil 12, the magnetic field 20 may be generated, and the magnetic field 20 may generate the eddy current 30 by meeting the electrical resistance component contained in the cooking container 1. The eddy current may heat the cooking container 1, and thus, the contents of the cooking container 1 may be cooked.

In addition, heating power of the cooking appliance 10 may be adjusted according to an amount of current flowing through the working coil 12. As a specific example, as the current flowing through the working coil 12 increases, the magnetic field 20 may be generated more, and thus, since the magnetic field passing through the cooking container 1 increases, the heating power of the cooking appliance 10 may increase.

The ferrite 13 is a component for protecting an internal circuit of the cooking appliance 10. Specifically, the ferrite 13 serves as a shield to block an influence of the magnetic field 20 generated from the working coil 12 or an electromagnetic field generated from the outside on the internal circuit of the cooking appliance 10.

For this, the ferrite 13 may be made of a material having very high permeability. The ferrite 13 serves to induce the magnetic field introduced into the cooking appliance 10 to flow through the ferrite 13 without being radiated. The movement of the magnetic field 20 generated in the working coil 12 by the ferrite 13 may be as illustrated in FIG. 2.

The cooktop 10 may further include components other than the upper glass 11, the working coil 12, and the ferrite core 13 described above. For example, the cooktop 10 may further include an insulator (not shown) disposed between the upper plate glass 11 and the working coil 12. That is, the cooktop according to the present disclosure is not limited to the cooktop 10 illustrated in FIG. 2.

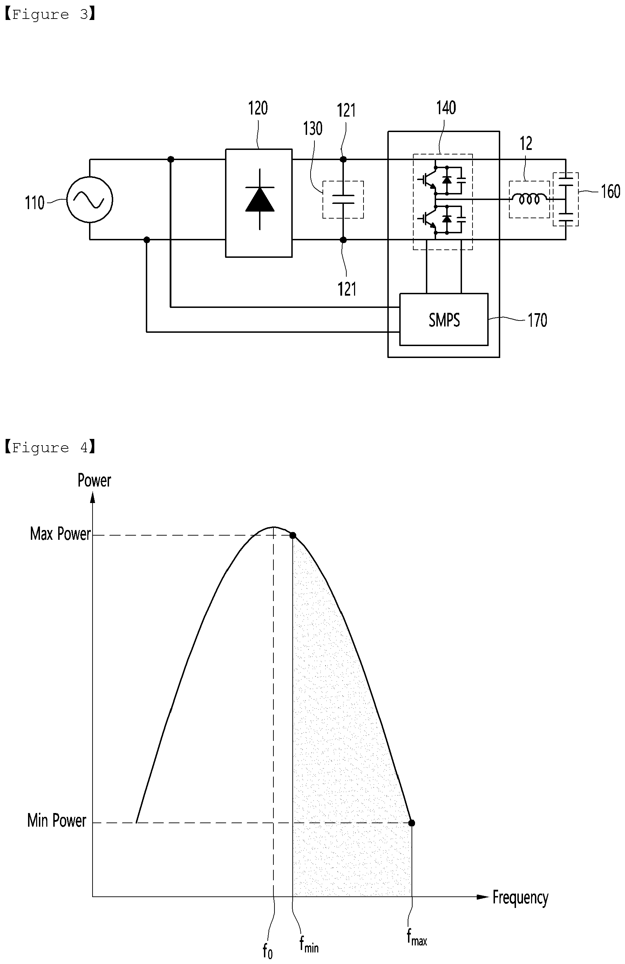

FIG. 3 is a circuit diagram of the cooktop according to an embodiment of the present disclosure.

Since the circuit diagram of the cooking appliance 10 illustrated in FIG. 3 is merely illustrative for convenience of description, the embodiment of the present disclosure is not limited thereto.

Referring to FIG. 3, the induction heating type cooktop may include at least some or all of a power supply 110, a rectifier 120, a DC link capacitor 130, an inverter 140, a working coil 12, a resonance capacitor 160, and an SMPS 170.

The power supply 110 may receive external power. Power received from the outside to the power supply 110 may be alternation current (AC) power.

The power supply 110 may supply an AC voltage to the rectifier 120.

The rectifier 120 is an electrical device for converting alternating current into direct current. The rectifier 120 converts the AC voltage supplied through the power supply 110 into a DC voltage. The rectifier 120 may supply the converted voltage to both DC ends 121.

An output terminal of the rectifier 120 may be connected to both the DC ends 121. Each of both the ends 121 of the DC output through the rectifier 120 may be referred to as a DC link. A voltage measured at each of both the DC ends 121 is referred to as a DC link voltage.

A DC link capacitor 130 serves as a buffer between the power supply 110 and the inverter 140. Specifically, the DC link capacitor 130 is used to maintain the DC link voltage converted through the rectifier 120 to supply the DC link voltage to the inverter 140.

The inverter 140 serves to switch the voltage applied to the working coil 12 so that high-frequency current flows through the working coil 12. The inverter 140 may include a semiconductor switch, and the semiconductor switch may be an insulated gate bipolar transistor (IGBT) or a silicon carbide (SiC) element, but this is only an example and the present disclosure is not limited thereto. The inverter 140 drives the semiconductor switch to cause a high-frequency current to flow in the working coil 12, thereby forming a high-frequency magnetic field in the working coil 12.

In the working coil 12, current may or may not flow depending on whether the switching element is driven. When current flows through the working coil 12, magnetic fields are generated. The working coil 12 may heat an cooking appliance by generating the magnetic fields as the current flows.

One side of the working coil 12 is connected to a connection point of the switching element of the inverter 140, and the other side is connected to the resonance capacitor 160.

The switching element is driven by a driver (not shown), and a high-frequency voltage is applied to the working coil 12 while the switching element operates alternately by controlling a switching time output from the driver. In addition, since a turn on/off time of the switching element applied from the driver (not shown) is controlled in a manner that is gradually compensated, the voltage supplied to the working coil 12 is converted from a low voltage into a high voltage.

The resonance capacitor 160 may be a component to serve as a buffer. The resonance capacitor 160 controls a saturation voltage increasing rate during the turn-off of the switching element to affect an energy loss during the turn-off time.

The SMPS 170 (switching mode power supply) refers to a power supply that efficiently converts power according to a switching operation. The SMPS 170 converts a DC input voltage into a voltage that is in the form of a square wave and then obtains a controlled DC output voltage through a filter. The SMPS 170 may minimize an unnecessary loss by controlling a flow of the power using a switching processor.

In the case of the cooking appliance 10 expressed by the circuit diagram illustrated in FIG. 3, a resonance frequency is determined by an inductance value of the working coil 12 and a capacitance value of the resonance capacitor 160. Then, a resonance curve may be formed around the determined resonance frequency, and the resonance curve may represent output power of the cooking appliance 10 according to a frequency band.

Next, FIG. 4 is a view illustrating output characteristics of the cooktop according to an embodiment of the present disclosure.

First, a Q factor (quality factor) may be a value representing sharpness of resonance in the resonance circuit. Therefore, in the case of the cooking appliance 10, the Q factor is determined by the inductance value of the working coil 12 included in the cooking appliance 10 and the capacitance value of the resonance capacitor 160. The resonance curve may be different depending on the Q factor. Thus, the cooking appliance 10 has different output characteristics according to the inductance value of the working coil 12 and the capacitance value of the resonance capacitor 160.

FIG. 4 illustrates an example of the resonance curve according to the Q factor. In general, the larger the Q factor, the sharper the shape of the curve, and the smaller the Q factor, the broader the shape of the curve.

A horizontal axis of the resonance curve may represent a frequency, and a vertical axis may represent output power. A frequency at which maximum power is output in the resonance curve is referred to as a resonance frequency f0.

In general, the cooking appliance 10 uses a frequency in a right region based on the resonance frequency f0 of the resonance curve. In addition, the cooking appliance 1 may have a minimum operating frequency and a maximum operating frequency, which are set in advance.

For example, the cooking appliance 10 may operate at a frequency corresponding to a range from the maximum operating frequency fmax to the minimum operating frequency fmin. That is, the operating frequency range of the cooking appliance 10 may be from the maximum operating frequency fmax to the minimum operating frequency fmin.

For example, the maximum operating frequency fmax may be an IGBT maximum switching frequency. The IGBT maximum switching frequency may mean a maximum driving frequency in consideration of a resistance voltage and capacity of the IGBT switching element. For example, the maximum operating frequency fmax may be 75 kHz.

The minimum operating frequency fmin may be about 20 kHz. In this case, since the cooking appliance 10 does not operate at an audible frequency (about 16 Hz to 20 kHz), noise of the cooking appliance 10 may be reduced.

Since setting values of the above-described maximum operating frequency fmax and minimum operating frequency fmin are only examples, the embodiment of the present disclosure is not limited thereto.

When receiving a heating command, the cooking appliance 10 may determine an operating frequency according to a heating power level set by the heating command. Specifically, the cooking appliance 10 may adjust the output power by decreasing in operating frequency as the set heating power level is higher and increasing in operating frequency as the set heating power level is lower. That is, when receiving the heating command, the cooking appliance 10 may perform a heating mode in which the cooking appliance operates in one of the operating frequency ranges according to the set heating power.

On the other hand, a portion of the magnetic field generated in the working coil 12 may be exposed to the outside. In particular, when the size of the cooking container 1 is smaller than the working coil 12 or the cooking container 1 and the working coil 12 is not aligned, more magnetic fields may be exposed, and thus, electromagnetic wave problems may become worse. Additionally, as the heating power level increases, the problem of electromagnetic wave exposure may be growing.

Accordingly, the present disclosure aims to minimize magnetic field exposure in the cooktop 10.

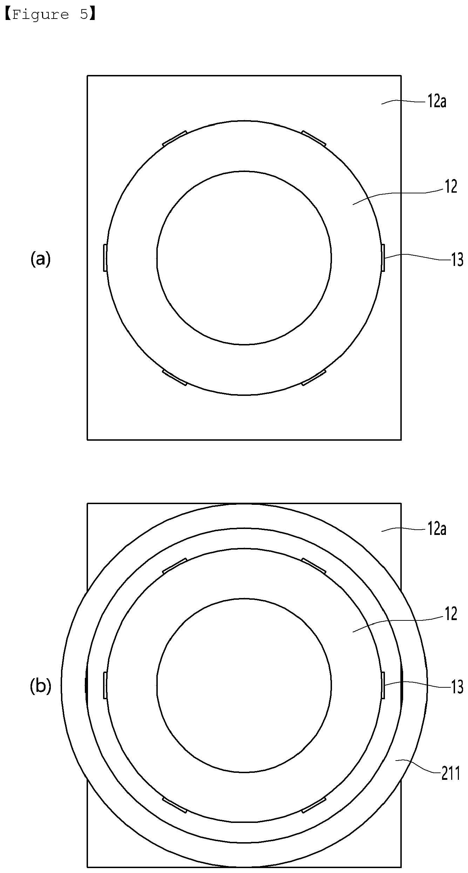

A first embodiment of the present disclosure provides a cooktop 10 including a shield coil therein that generates a magnetic field that cancels out the magnetic field exposed in the cooktop 10. This will be described with reference to FIGS. 5 to 22.

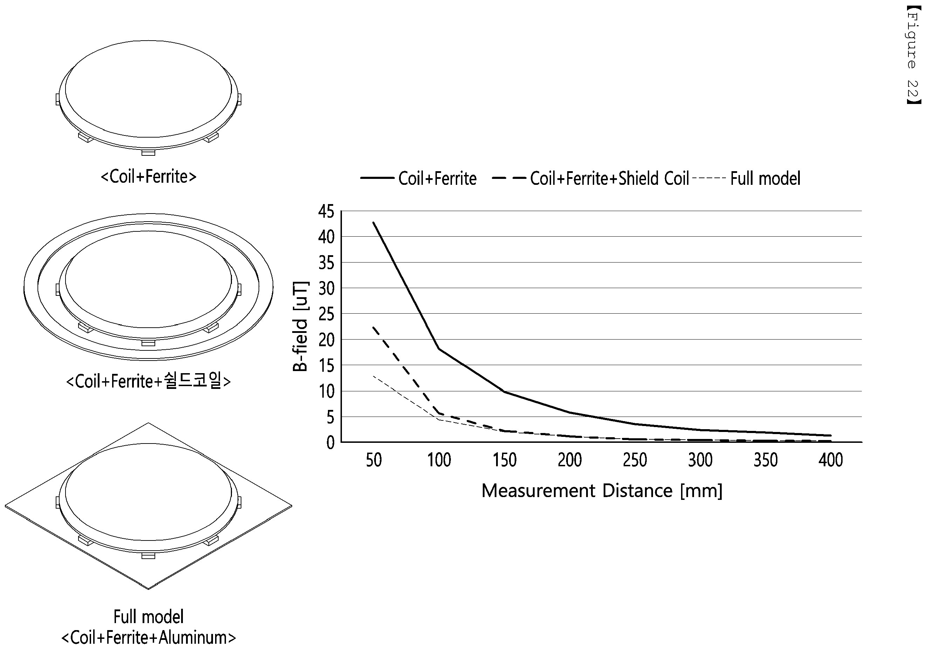

A second embodiment of the present disclosure provides a shield coil for generating a magnetic field that cancels out the magnetic field exposed in the cooktop 10, as a device separate from the cooktop 10, that is, a shield device. This will be described with reference to FIGS. 22 to 29.

First, the cooktop 10 according to the first embodiment of the present disclosure will be described. The cooktop 10 may include a shield coil 211 (see FIG. 5) for generating a magnetic field that cancels out the magnetic field generated in the working coil 12.

FIG. 5 is an exemplary diagram illustrating the structures of a working coil and a shield coil according to a first embodiment of the present disclosure.

In particular, (a) of FIG. 5 is a plan view illustrating a working coil of a cooktop including only a working coil, and (b) of FIG. 5 is a plan view illustrating a working coil of a cooktop including only a working coil and a shield coil.

The working coil 12 may be wound around and disposed on an upper portion of an aluminum plate 12a. The aluminum plate 12a may be a supporter that supports the working coil 12. Additionally, the aluminum plate 12a may block magnetic field exposure.

The ferrite core 13 may be disposed below the working coil 12. In particular, the ferrite core 13 may be disposed between the working coil 12 and the aluminum plate 12a.

As illustrated in (b) of FIG. 5, when the cooktop 10 further includes a shield coil 211, the shield coil 211 may be disposed outside the working coil 12.

Specifically, the inner diameter of the shield coil 211 may be larger than the outer diameter of the working coil 12. Accordingly, the working coil 12 may be disposed inside the shield coil 211.

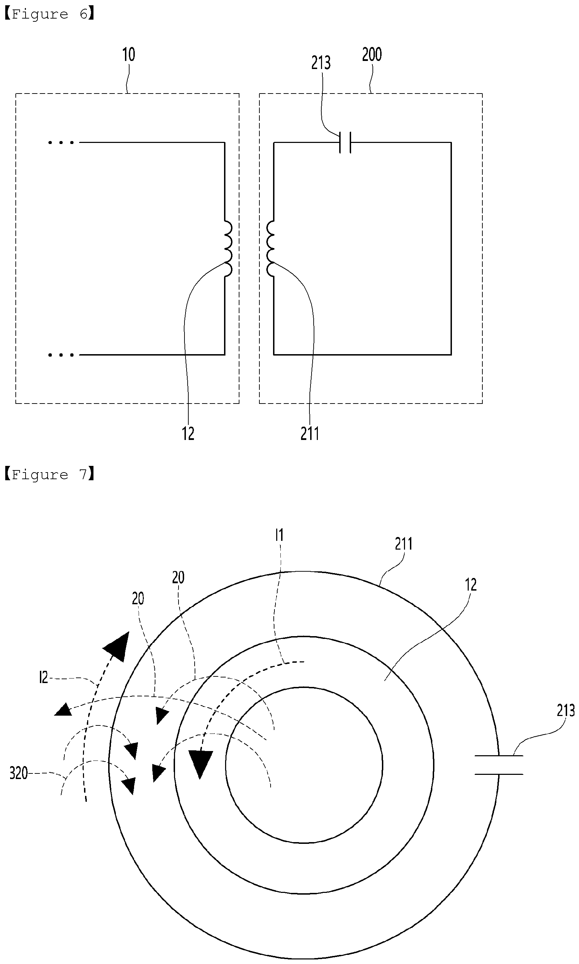

FIG. 6 is a circuit diagram illustrating a working coil and a shield coil of a cooktop according to the first embodiment of the present disclosure.

The cooktop 10 according to an embodiment of the present disclosure may include a working coil 12 and a shield circuit 200, and the shield coil 211 may be one component of the shield circuit 200.

In more detail, the shield circuit 200 may include a shield coil 211 and a shield capacitor 213.

When current flows through the working coil 12 and an electromotive force induced in the shield coil 211 is generated, a voltage is generated in a direction to cancel out the electromotive force in accordance with Lenz's law. That is, in the shield circuit 200, the electromotive force is induced as the current flows through the working coil 12, and a voltage may be generated in a direction to cancel out the electromotive force. Accordingly, the shield circuit 200 may generate a voltage without being connected to a separate battery or power source, and the magnetic field generated by such a voltage may cancel out the magnetic field generated in the working coil 12.

The value of the shield capacitor 213 may be adjusted to make an out-of-phase.

On the other hand, the capacitance of the shield capacitor 213 may have a value that makes the resonance frequency of the shield circuit 200 smaller than the driving frequency of the working coil 12. That is, the shield capacitor 213 may have a capacitance that makes the resonance frequency of the shield circuit 200 smaller than the driving frequency of the working coil 12. As such, when the resonance frequency of the shield circuit 200 is formed to be lower than the resonance frequency of the working coil 12, the magnetic field generated in the shield coil 211 may be formed in the same region as the magnetic field region generated in the working coil 12. Accordingly, the magnetic field generated in the shield coil 211 may effectively cancel off the magnetic field generated in the working coil 12.

The capacitance of the shield capacitor 213 may be set so that the phase is different from the phase of the working coil 12 by about 180°.

The amount of the current induced in the shield coil 211 may be adjusted by the capacitance of the shield capacitor 213 connected in series with the shield coil 211. The effect of reducing the magnetic field exposed to the outside may vary depending on the current value induced in the shield circuit 200.

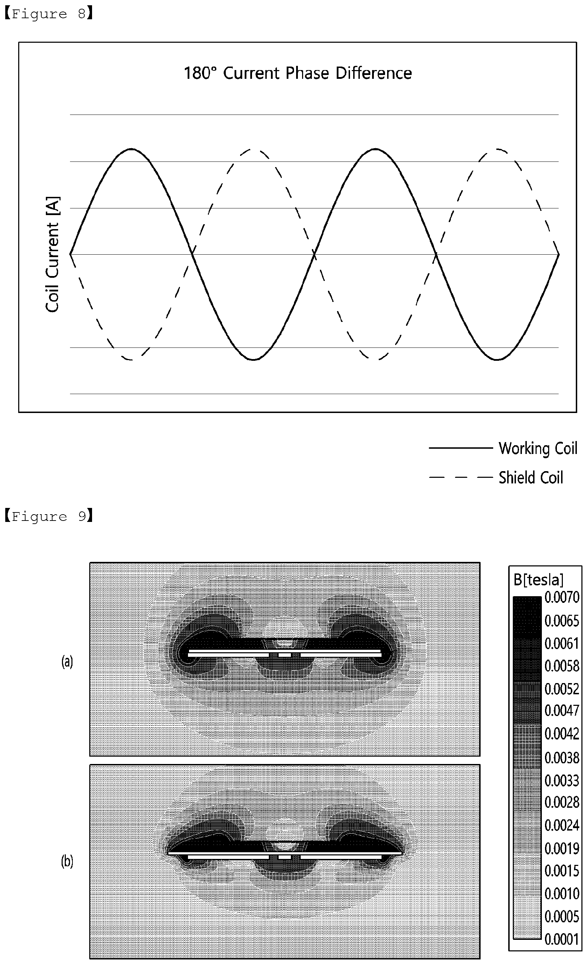

Figure 7 is a view illustrating a current and a magnetic field induced in each of the working coil and the shield coil of the cooktop according to the first embodiment of the present disclosure, FIG. 8 is a waveform illustrating a current flowing through the working coil and a current flowing through the shield coil in the cooktop according to the first embodiment of the present disclosure, and FIG. 9 is a view illustrating the magnitude of the magnetic field around the cooktop and the surrounding thereof according to the first embodiment of the present disclosure.

As illustrated in FIG. 7, when a first current I1 flows through the working coil 12, a first magnetic field 20 may be generated. On the other hand, the first magnetic field 20 may pass through the shield coil 211, and accordingly, a second current I2, which is an induced current, flows through the shield coil 211. As the second current I2 is induced in the shield coil 211, a second magnetic field 320 is generated. The first magnetic field 20 and the second magnetic field 320 are concentrated between the working coil 12 and the shield coil 211, and thus, the heating intensity of the cooking container 1 placed in the heating region may increase. On the other hand, in the region outside the shield coil 211, that is, outside the cooktop 10, the first magnetic field 20 and the second magnetic field 320 are in opposite directions, and thus, the first magnetic field 20 and the second magnetic field 320 may be canceled out.

That is, the shield circuit 200 may generate the second magnetic field 320 that cancels the first magnetic field 20 generated in the working coil 12 in the outer region of the cooktop 10.

As illustrated in FIG. 8, the difference between the phase of the first current I1 flowing through the working coil 12 and the phase of the second current I2 flowing through the shield coil 211 may be about 180°. In this case, the first magnetic field 20 and the second magnetic field 320 may be canceled out in the outer region of the shield coil 211. Accordingly, the first magnetic field 20 exposed to the outer region of the shield coil 211, that is, the outside of the cooktop 10, may be canceled out by the second magnetic field 320.

In particular, referring to FIG. 9, (a) of FIG. 9 is a view illustrating the magnitude of the magnetic field in the cooktop having only the working coil (not having the shield coil), and (b) of FIG. 9 is a view illustrating the magnitude of the magnetic field in the cooktop having the working coil and the shield coil.

When comparing (a) of FIG. 9 with (b) of FIG. 9, it can be seen that the magnitude of the magnetic field in the outer region, that is, the outer region of the cooktop 10, is smaller in (b) of FIG. 9 than in (a) of FIG. 9. That is, it can be confirmed that, when the shield coil 211 is provided together with the working coil 12, the magnetic field exposed to the outside of the cooktop 10 among the magnetic fields generated in the working coil 12 is canceled out by the magnetic field generated in the shield coil 211.

On the other hand, in some embodiments, the shield circuit 200 may further include a switch 210. Here, the switch 210 is referred to as a first switch 210 in order for distinction from a switch 223, which will be described later, but it is reasonable that the name is not limited.

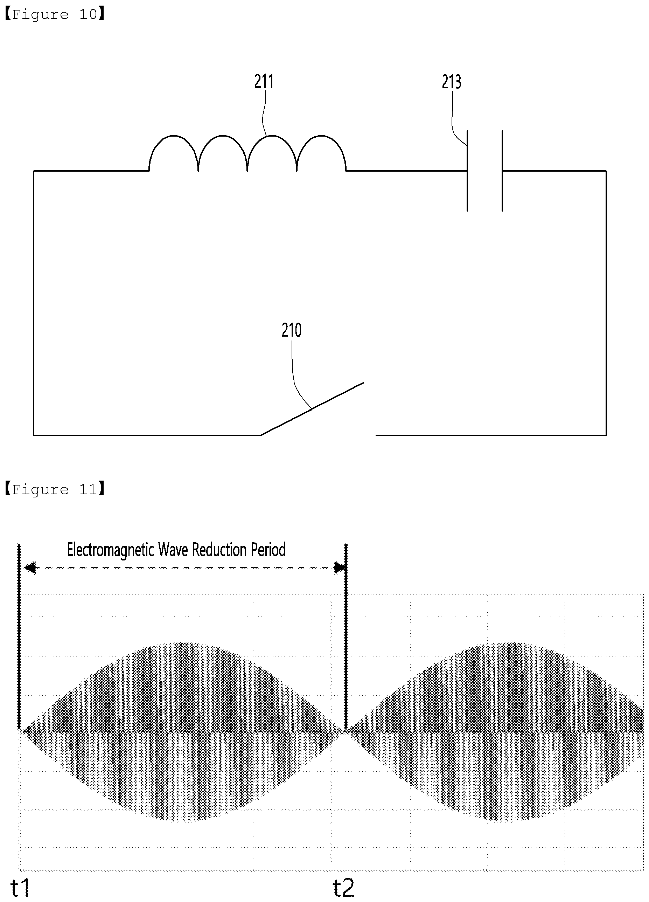

FIG. 10 is a circuit diagram of a shield circuit including a first switch according to the first embodiment of the present disclosure.

Although not illustrated in FIG. 10, the shield circuit may further include a resistor (not shown).

The first switch 210 may be connected in series with the shield coil 211 and the shield capacitor 213. The first switch 210 may determine whether to operate in a electromagnetic wave reduction mode. That is, the cooktop 10 may operate in the electromagnetic wave reduction mode when the first switch 210 is on, and may not operate in the electromagnetic wave reduction mode when the first switch 210 is off.

When the first switch 210 is not present, the shield circuit 200 may operate automatically as the first current I1 flowing through the working coil 12 is controlled.

When the first switch 210 is present, on/off control of the first switch 210 may be required. According to an embodiment, the first switch 210 may be turned on or off at a zero crossing point of voltage.

FIG. 11 is a voltage waveform for describing a point at which the first switch of the shield circuit according to the first embodiment of the present disclosure is turned on and off.

The cooktop 10 may detect the zero crossing point of voltage. In particular, a control unit (not shown) may detect the zero crossing point of the voltage. The zero crossing point may refer to a point at which no voltage is applied, that is, a state in which the voltage is 0. In FIG. 11, the zero crossing point may be t1 and t2.

In a case where on or off control of the first switch 210 is required, when the zero crossing point is detected, the first switch 210 may be turned on or off at the detected zero crossing point.

For example, when the operation in the electromagnetic wave reduction mode is required before t1, the first switch 210 may be turned on at the zero crossing point t1, and thus, the electromagnetic wave may be reduced. When the operation in the electromagnetic wave reduction mode is not required before t2, the first switch 210 may be turned off at the next zero crossing point t2.

The first switch 210 may be implemented as a field effect transistor (FET) or an insulated gate bipolar transistor (IGBT). That is, a low current is required to turn on/off the first switch 210, and thus the first switch 210 may be implemented with a relatively low-cost switch.

As such, when the on/off of the first switch 210 is controlled at the zero crossing point, there is an advantage in that the breakdown voltage and current applied to the switch are lowered.

When the shield circuit 200 includes the first switch 210, there is an advantage in that the shield coil 210 may not be driven when the use of the shield coil 210 is unnecessary.

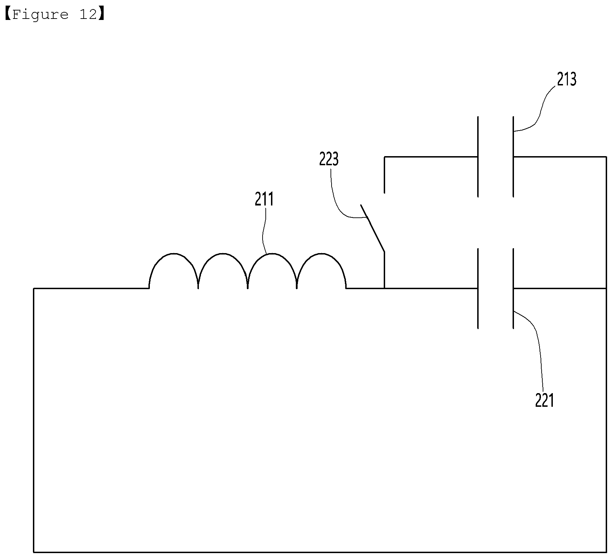

On the other hand, in some embodiments, the shield circuit 200 may perform not only an electromagnetic wave reduction function but also a heating power reinforcement function. The cooktop 10 may operate in the electromagnetic wave reduction mode or the heating power reinforcement mode through the shield circuit 200. Referring to FIG. 12, the shield circuit 200 capable of performing the heating power reinforcement function will be described. For the electromagnetic wave reduction function or the heating power reinforcement function, the shield circuit 200 may further include a switch 223 and a heating power reinforcement capacitor 221. Here, since the switch 223 is merely named the second switch in order for distinction from the first switch 210, it is reasonable that the name is not limited.

FIG. 12 is a circuit diagram of a shield circuit including a second switch and a heating power reinforcement capacitor according to the first embodiment of the present disclosure.

Although not illustrated in FIG. 12, in some embodiments, the shield circuit 200 may further include a first switch 210. That is, when the shield circuit 200 further includes the first switch 210 as illustrated in FIG. 12, the first switch 210 may determine whether to operate in either the electromagnetic wave reduction mode or the heating power enhancement mode. That is, when the first switch 210 is on, the first switch 210 may operate in the electromagnetic wave reduction mode or the heating power reinforcement mode, and when the first switch 210 is off, the first switch 210 may not operate in the electromagnetic wave reduction mode or the heating power reinforcement mode.. Since the first switch 210 is the same as described with reference to FIG. 10, a redundant description thereof is omitted.

The shield circuit 200 may include a shield coil 211, a shield capacitor 213, a heating power reinforcement capacitor 221, and a second switch 223.

Since the shield coil 211 and the shield capacitor 213 are the same as described above, a redundant description is omitted.

The heating power reinforcement capacitor 221 may be connected in parallel with the shield capacitor 213. The second switch 223 may be connected between the heating power reinforcement capacitor 221 and the shield capacitor 213. One end of the second switch 223 may be connected between the shield coil 211 and the heating power reinforcement capacitor 221, and the other end of the second switch 223 may be connected to the shield capacitor 213.

When the second switch 223 is on, the shield coil 211 may be connected to the heating power reinforcement capacitor 221 and the shield capacitor 223 connected in parallel with each other. When the second switch 223 is on, a current may flow along a path connecting the shield coil 211 to the heating power reinforcement capacitor 221 and the shield capacitor 223 connected in parallel.

If the inductance of the shield coil 211 is L, the capacitance of the heating power reinforcement capacitor 221 is C1, and the capacitance of the shield capacitor 223 is C2, the composite capacitance may be C1+C2 when the second switch 223 is on. Therefore, considering the equation $1/2\pi\sqrt{LC}$ for calculating the resonance frequency, the resonance frequency may decrease as the composite capacitance increases. In particular, C1 and C2 may be determined so that the resonance frequency is smaller than the operating frequency. Accordingly, the current phases of the working coil 12 and the shield coil 211 may be out-of-phase (for example, the phase difference is about 180°). Since the current phases of the working coil 12 and the shield coil 211 are out-of-phase, magnetic fields are formed in opposite directions in the working coil 12 and the shield coil 211. Accordingly, the magnetic fields are canceled out, so that the operation may be performed in the electromagnetic wave reduction mode.

On the other hand, when the second switch 223 is off, the shield coil 211 may be connected only to the heating power reinforcement capacitor 221. When the second switch 223 is off, a current may flow along a path connecting the shield coil 211 to the heating power reinforcement capacitor 221.

If the inductance of the shield coil 211 is L, the capacitance of the heating power reinforcement capacitor 221 is C1, and the capacitance of the shield capacitor 223 is C2, the composite capacitance may be C1 when the second switch 223 is off. Therefore, considering the equation $1/2\pi\sqrt{LC}$ for calculating the resonance frequency, the resonance frequency when the second switch 223 is off may be greater than the resonance frequency when the second switch 223 is on. In particular, C1 may be determined so that the resonance frequency when the second switch 223 is off is greater than the operating frequency. Accordingly, the current phases of the working coil 12 and the shield coil 211 may be in-phase (for example, the phase difference is about 0°). Since the current phases of the working coil 12 and the shield coil 211 are in-phase, magnetic fields are formed in the same direction in the working coil 12 and the shield coil 211. Accordingly, the magnetic fields are concentrated, and thus, the operation may be performed in the electromagnetic wave reduction mode in which the heating power becomes stronger.

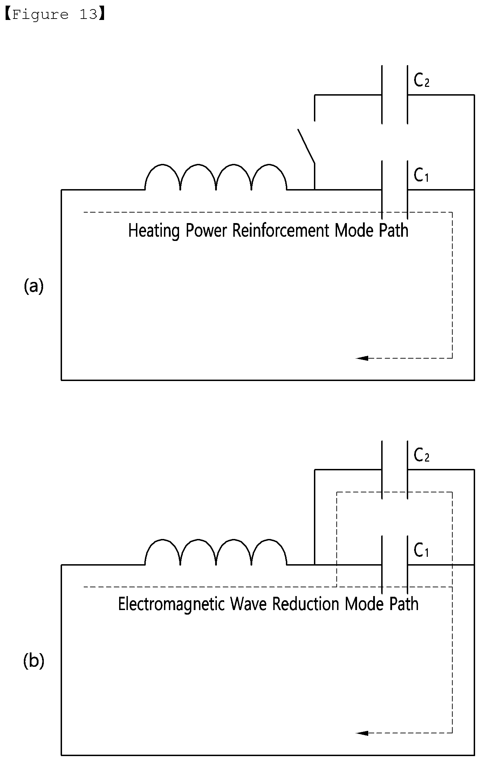

FIG. 13 is a view illustrating a shield circuit according to an operation mode, according to the first embodiment of the present disclosure.

Specifically, (a) of FIG. 13 may illustrate the shield circuit when operating in the heating power reinforcement mode. The second switch 223 is turned off in the heating power reinforcement mode, and thus, the current may flow through the shield coil 221 and the heating power reinforcement capacitor 221.

(b) of FIG. 13 may illustrate the shield circuit when operating in the electromagnetic wave reduction mode. The second switch 223 is turned on in the electromagnetic wave reduction mode, and thus, the current may flow through the shield coil 221, the heating power reinforcement capacitor 221, and the shield capacitor 213.

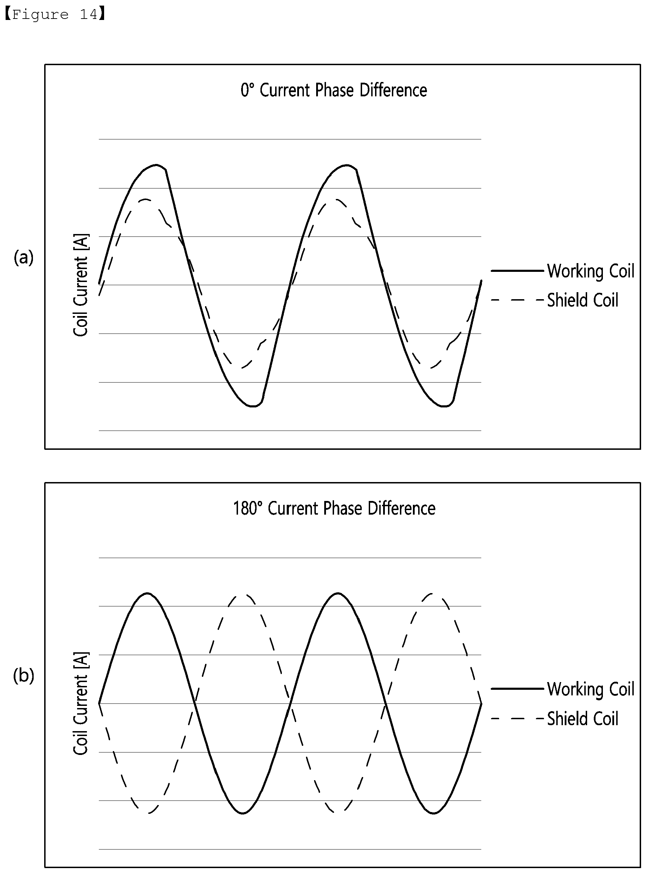

FIG. 14 is a view illustrating current pulses of the working coil and the shield coil according to an operation mode, according to the first embodiment of the present disclosure.

Specifically, (a) of FIG. 14 is a view illustrating the current flowing through the working coil 12 and the current flowing through the shield coil 211 when operating in the heating power reinforcement mode. As illustrated in (a) of FIG. 14, the phases of the working coil 12 and the shield coil 213 in the heating power reinforcement mode may be equal to each other. Accordingly, the magnetic field generated in the working coil 12 and the magnetic field generated in the shield coil 213 are concentrated in the cooking container 1, and thus, the output may be increased.

On the other hand, (b) of FIG. 14 is a view illustrating the current flowing through the working coil 12 and the current flowing through the shield coil 211 when operating in the electromagnetic wave reduction mode. As illustrated in (b) of FIG. 14, the difference between the phase of the working coil 12 and the shield coil 213 in the electromagnetic wave reduction mode may be about 180°. Accordingly, the magnetic field generated in the working coil 12 and the magnetic field generated in the shield coil 213 are cancelled out, and thus, the generation of the electromagnetic waves may be minimized.

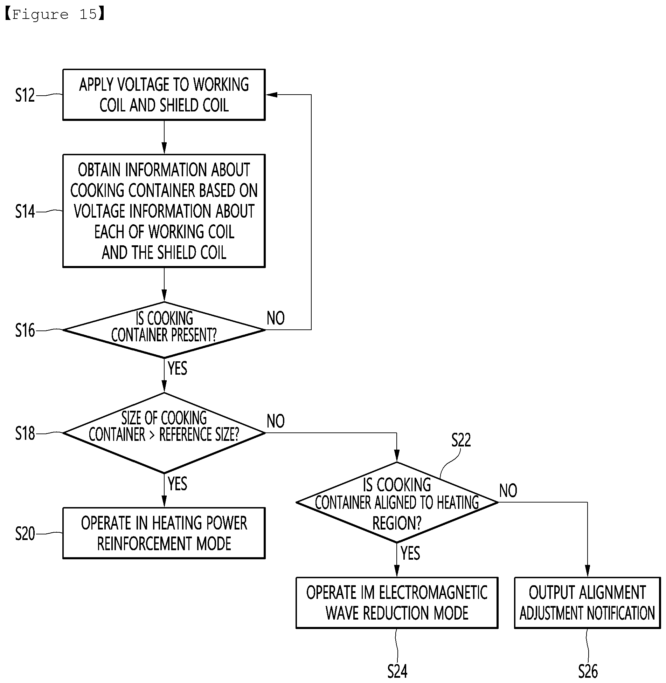

FIG. 15 is a flowchart illustrating an operating method of a cooktop according to a first embodiment of the present disclosure.

According to an embodiment of the present disclosure, the cooktop 10 may have different operating modes according to the cooking container 1. In particular, the cooktop 10 may apply pulse decaying to determine the cooking container 1 and operate according to the determination result. Hereinafter, the method thereof will be described in detail.

The cooktop 10 may include a control unit (not shown) for controlling the respective components provided therein.

The control unit may apply voltage to the working coil 12 and the shield coil 211 (S12).

According to the first embodiment, the inverter 140 may apply voltage to the working coil 12, and voltage may be applied to the shield coil 211 by the magnetic field generated in the working coil 12.

According to the second embodiment, the shield coil 211 may be connected to the inverter 140 or a separate inverter (not shown), and voltage may be applied to the working coil 12 and the shield coil 211 by the inverter.

The control unit may obtain information about the cooking container 1 based on voltage information about each of the working coil 12 and the shield coil 211 (S14).

As the voltage is applied to the working coil 12 and the shield coil 211, a voltage pulse is formed. The voltage pulse may be formed differently according to the presence or absence of the cooking container 1, the size of the cooking container 1, the arrangement state of the cooking container 1, etc. The second switch 223 may be turned on or off according to the information about the cooking container 1.

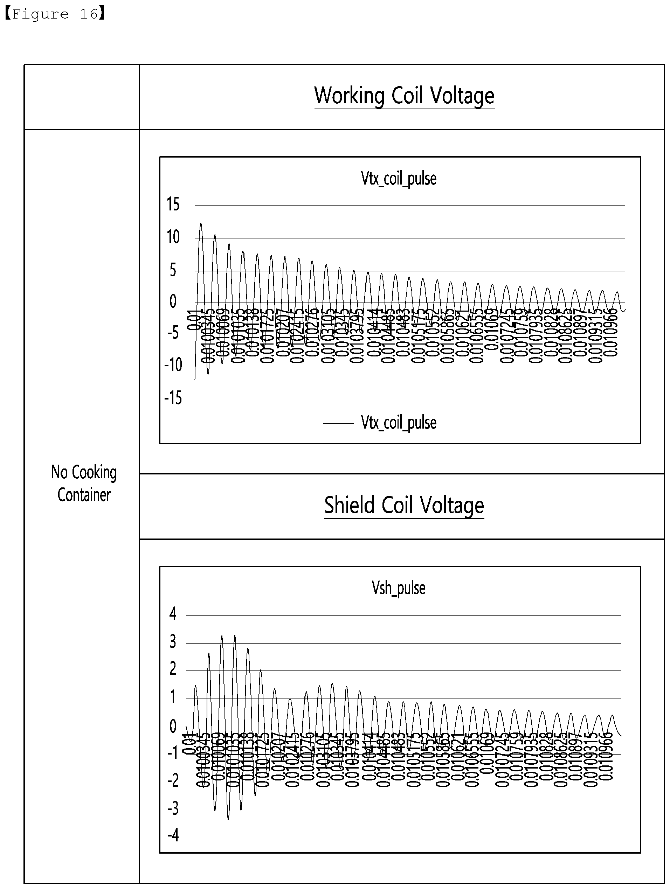

Accordingly, the voltage information may refer to information about the voltage pulse. The voltage pulse according to the cooking container 1 will be described in detail with reference to FIGS. 16 to 19.

FIG. 16 is a view illustrating voltage pulses in the working coil and shield coil when the cooking container is not present.

As illustrated in FIG. 16, when the cooking container 1 is not present on the upper plate glass 11, the voltage pulse in the working coil 121 is formed in a gradually decreasing form. When an induced current is formed in the shield coil 211, the voltage pulse may temporarily increase significantly, decrease, and then gradually decrease.

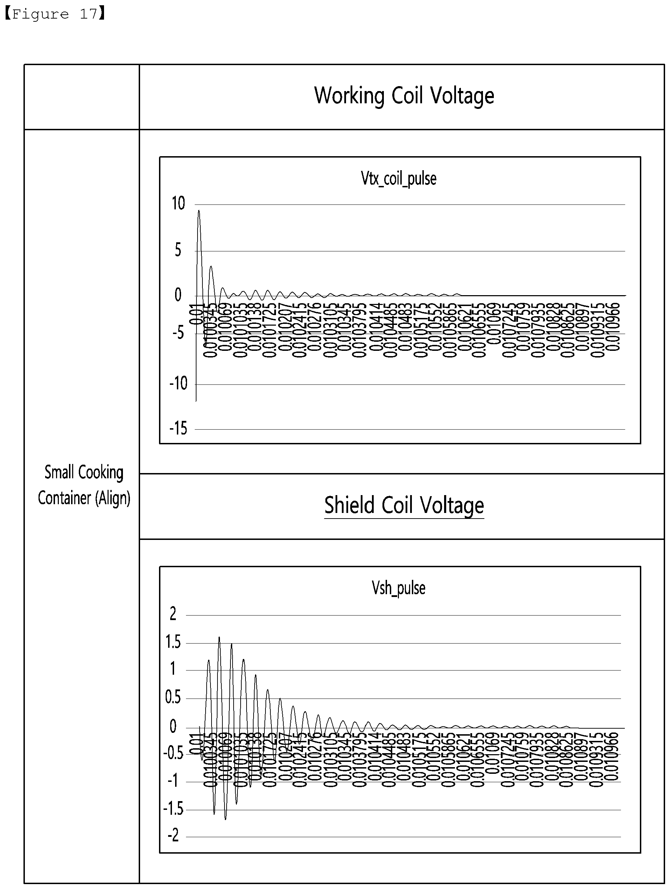

Figure 17 is a diagram showing voltage pulses at each of the working coil and shield coil when a cooking container smaller than the standard size is aligned in the heating area.

The heating region may represent a region through which the magnetic field generated in the working coil 12 passes. The case where the cooking container 1 is aligned to the heating region is a case where the cooking container 1 is properly placed on the heating region formed in the upper plate glass 11, and may refer to a case where the cooking container 1 is arranged to occupy more than the reference area of the heating region.

As illustrated in FIG. 17, when the size of the cooking container 1 is smaller than or equal to the reference size and is aligned, the voltage pulse in the working coil 12 increases and then decreases sharply. At this time, the peak value is the first value and it may take a first time to decrease from the peak value to 0. On the other hand, in the shield coil 211, the voltage pulse increases and then decreases. At this time, the peak value is a second value and it may take a second time to decrease from the peak value to 0.

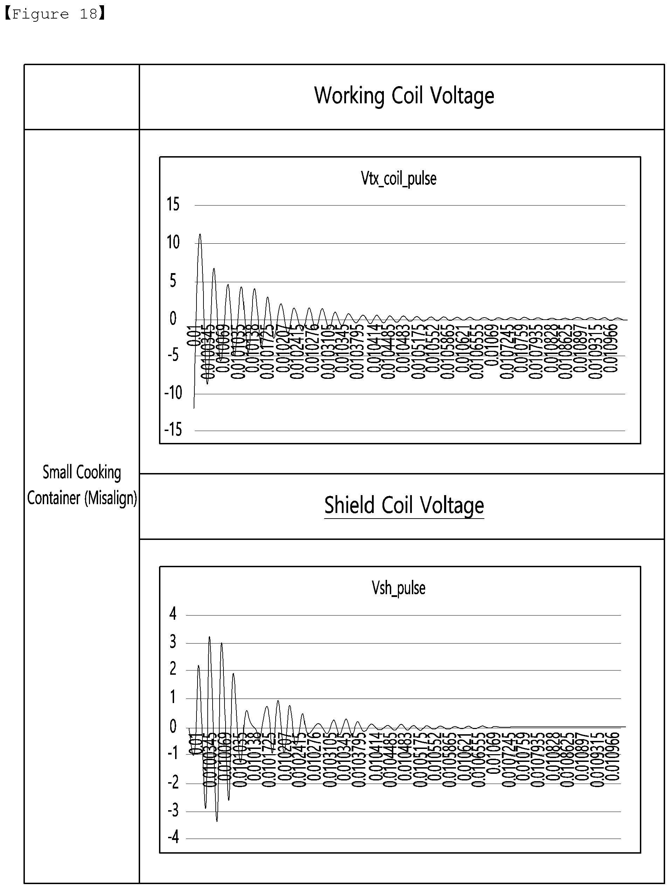

FIG. 18 is a view illustrating voltage pulses in the working coil and the shield coil when the cooking container smaller than the reference size is misaligned in the heating region.

The case where the cooking container 1 is misaligned to the heating region is a case where the cooking container 1 is not properly placed on the heating region formed in the upper plate glass 11, and may refer to a case where the cooking container 1 is arranged to occupy only less than the reference area of the heating region.

As illustrated in FIG. 18, when the size of the cooking container 1 is smaller than or equal to the reference size and is misaligned, the voltage pulse in the working coil 12 increases and then decreases. At this time, the peak value is a third value greater than the first value and it may take a third time longer than the first time to decrease from the peak value to 0. On the other hand, in the shield coil 211, the voltage pulse may repeat an increase and decrease at least twice. At this time, the peak value may be a fourth value greater than the second value, and it may take a fourth time longer than the second time to decrease from the peak value to 0.

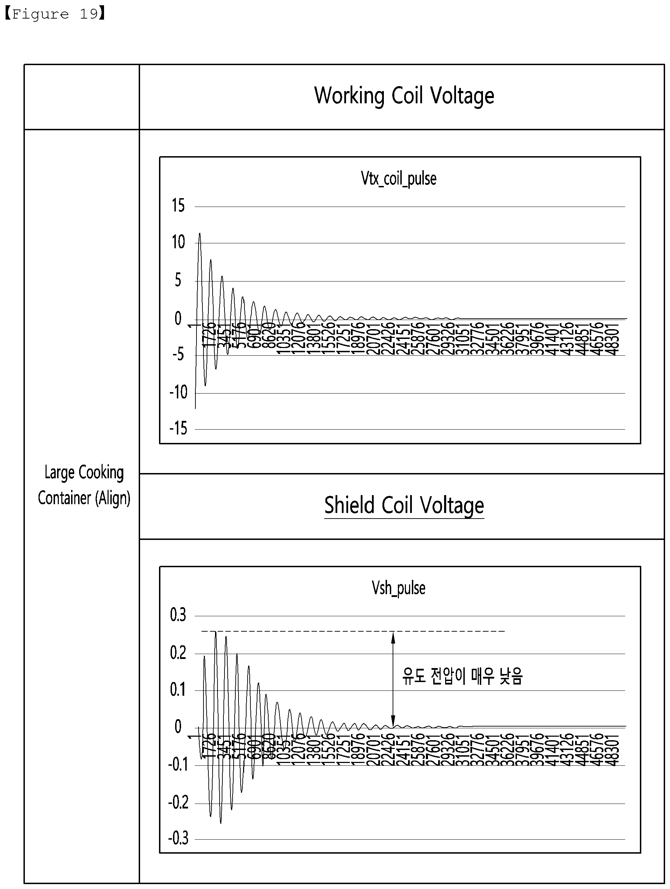

FIG. 19 is a view illustrating voltage pulses in the working coil and the shield coil when the cooking container larger than the reference size is aligned in the heating region.

As illustrated in FIG. 19, when the size of the cooking container 1 is larger than the reference size and is aligned, the voltage pulse in the working coil 12 increases and then decreases. At this time, the peak value similar to the third value in FIG. 18 and it may take a fifth time longer than the first time and shorter than the third time to decrease from the peak value to 0. On the other hand, in the shield coil 211, the voltage pulse increases and then decreases. At this time, the peak value is a sixth value less than the second value in FIG. 17 and the fourth value in FIG. 18, and it may take a sixth time shorter than the second time in FIG. 17 to decrease from the peak value to 0.

As confirmed from FIGS. 16 to 19, voltage pulses are different in the working coil 12 and the shield coil 211 according to the presence or absence of the cooking container 1, the size of the cooking container 1, and the alignment or misalignment of the cooking container 1. Accordingly, the control unit may obtain the presence or absence of the cooking container 1, the size of the cooking container 1, and the arrangement state of the cooking container 1 based on at least one of the voltage pulse in the working coil 12 and the voltage pulse in the shield coil 211. For example, the control unit may obtain information about the cooking container 1 by using information about the pulse count, the peak value, the time taken to decrease from the peak value to 0, and the slope from the peak value to the first zero arrival point through the voltage pulse in the working coil 12 and the voltage pulse in the shield coil 211.

FIG. 13 is described again.

When the control unit obtains information about the cooking container, the control unit may determine whether the cooking container is present (S16).

The control unit may first determine whether the cooking container 1 is present.

When the cooking container 1 is not present, the control unit may apply voltage to the working coil 12 and the shield coil 211 again.

When the cooking container 1 is present, the control unit may determine whether the size of the cooking container 1 is larger than the reference size (S18).

In the present specification, the reference size is preset and may be set differently according to the size of the heating region.

When the size of the cooking container 1 is larger than the reference size, the control unit may operate in the heating power reinforcement mode (S20).

That is, when the size of the cooking container 1 is larger than the reference size, the control unit may turn off the second switch 223 and thus operate in the heating power reinforcement mode.

When the cooking container 1 is large, most of the magnetic field generated in the working coil 12 passes through the cooking container 1, and thus, a small magnetic field is exposed to the outside of the cooktop 10.

On the other hand, when the cooking container 1 is smaller than the reference size, the control unit may determine whether the cooking container 1 is aligned to the heating region (S22).

When the cooking container 1 is smaller than the reference size and is aligned to the heating region, the control unit may operate in the electromagnetic wave reduction mode (S24).

That is, when the size of the cooking container 1 is smaller than the reference size, the control unit may turn on the second switch 223 and thus operate in the electromagnetic wave reduction mode.

When the cooking container 1 is small, there is a high possibility that some of the magnetic field generated in the working coil 12 will not reach the cooking container 1 and will be exposed to the outside of the cooktop 10.

On the other hand, when the size of the cooking container 1 is smaller than the reference size and the cooking container 1 is not aligned to the heating region, the control unit may output an alignment adjustment notification (S26).

When the cooking container 1 is not properly disposed in the heating region, there a high possibility that electromagnetic waves will be exposed to the outside of the cooktop 10, and heating efficiency is low. Accordingly, a notification may be output through an LED (not shown) or a speaker (not shown). The cooktop 10 may further include an output unit that outputs a notification when the size of the cooking container 1 is smaller than the reference size and the cooking container 1 is not aligned to the heating region, and the output unit may be at least one of an LED (not shown) or a speaker (not shown).

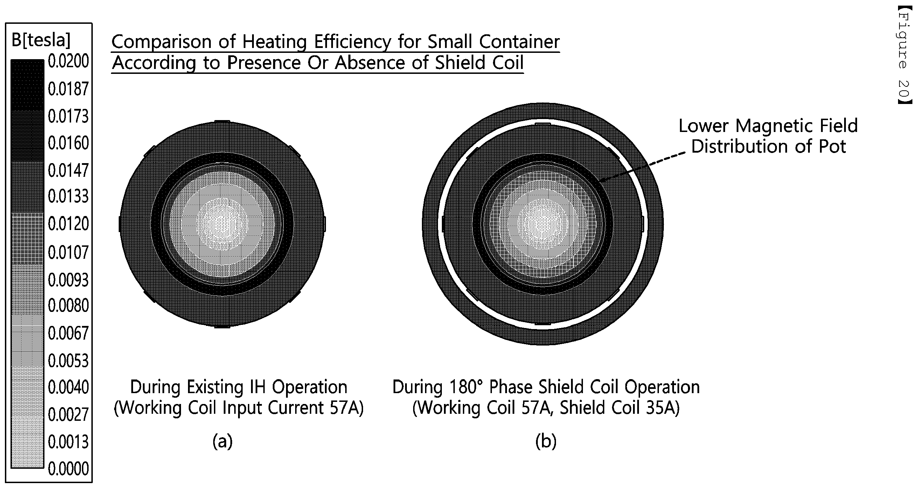

Next, the heating efficiency of the cooktop 10 according to an embodiment of the present disclosure will be described with reference to FIGS. 20 to 22. In particular, heating efficiency is described through a magnetic field distribution in a heating region.

FIG. 20 is a view illustrating a magnetic field distribution in a heating region when the cooktop according to the first embodiment of the present disclosure heats a cooking container smaller than a reference size.

In FIG. 20, it is assumed that the cooking container 1 is aligned to the heating region.

(a) of FIG. 20 illustrates the magnetic field distribution in the heating region in the cooktop 10 provided without the shield circuit 200, and (b) of FIG. 20 illustrates the magnetic field distribution in the heating region in the cooktop 10 provided with the shield circuit 200.

Referring to FIG. 20, it can be confirmed that the lower magnetic field distribution of the cooking container (pot) is similar in the heating region regardless of the presence or absence of the shield circuit 200. Therefore, it can be confirmed that the heating performance of the cooking container 1 is similar regardless of the presence or absence of the shield circuit 200. That is, it can be confirmed that, even when the cooktop 10 includes the shield circuit 200, the cooking container 1 can be heated with the same or similar heating performance as the case of not including the shield circuit 200 and the electromagnetic wave exposure to the outside of the cooktop 10 can be minimized.

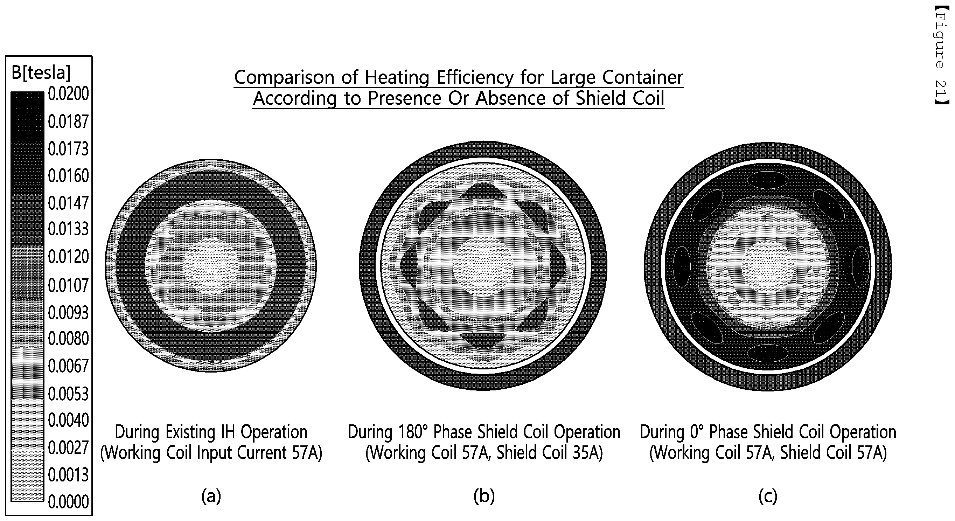

FIG. 21 is a view illustrating a magnetic field distribution in a heating region when the cooktop according to the first embodiment of the present disclosure heats a cooking container larger than a reference size.

(a) of FIG. 21 illustrates the magnetic field distribution in the heating region in the cooktop 10 provided without the shield circuit 200, (b) of FIG. 21 illustrates the magnetic field distribution in the heating region of the cooktop 10 provided with the shield circuit 200 and operating in the electromagnetic wave reduction mode, and (c) of FIG. 21 illustrates the magnetic field distribution in the heating region of the cooktop 10 provided with the shield circuit 200 and operating in the heating power reinforcement mode.

Referring to FIG. 21, it can be confirmed that, when the cooktop 10 is provided with the shield circuit 200 and operates in the heating power reinforcement mode (operates with in-phase), the magnetic field strength of the heating region is stronger than the magnetic field strength of the heating region when the cooktop 10 operates in the electromagnetic wave reduction mode (operating with out-of-phase). That is, it can be confirmed that, when the cooktop 10 includes the shield circuit 200 and heats the cooking container 1 larger than the reference size, the output can be increased because the cooktop 10 operates in the heating power reinforcement mode.

FIG. 22 is a view illustrating the magnitude of the magnetic field exposed to the outside from the cooktop according to the first embodiment of the present disclosure.

Coil+Ferrite represents an existing cooktop that is not provided with the shield circuit 200. Coil+Ferrite+Shield Coil represents a cooktop that is provided with the shield circuit 200. Full model represents Coil+Ferrite+Aluminum, and Aluminum may represent an aluminum plate 12a.

Referring to FIG. 22, when the aluminum plate 12a is removed, the magnetic field exposed to the outside increases, but when the shield circuit 200 is provided, the electromagnetic wave reduction performance can be confirmed. That is, it can be confirmed from FIG. 22 that, when the cooktop 10 is provided with the shield circuit 200, there is an advantage of reducing the manufacturing and assembly costs, volume, and weight of the aluminum plate 12a.

According to an embodiment of the present disclosure, an effect of reducing the exposed magnetic field and reinforcing the heating power can be obtained by canceling out the magnetic field exposed to the outside of the cooktop 10 or collecting and integrating the exposed magnetic field and recycling the magnetic field as a second source.

That is, according to an embodiment of the present disclosure, there is an advantage of reducing the electromagnetic waves and maximizing the heating of the cooking container 1.

Next, a shield device, a cooktop, and a cooktop system including the same according to a second embodiment of the present disclosure will be described, and the cooktop system may include a cooktop 10 and a shield device 300 placed on the cooktop 10.

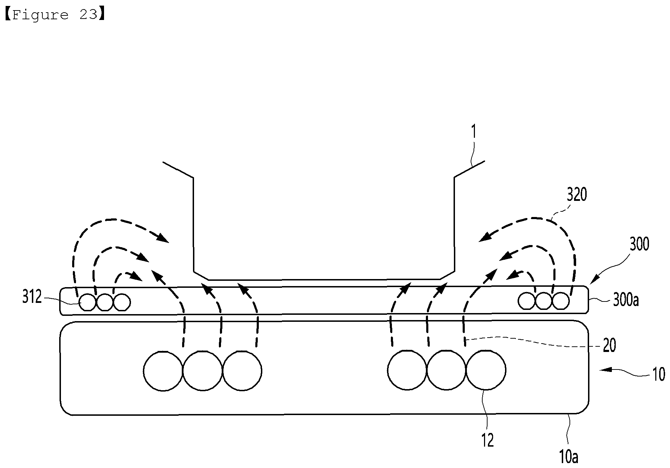

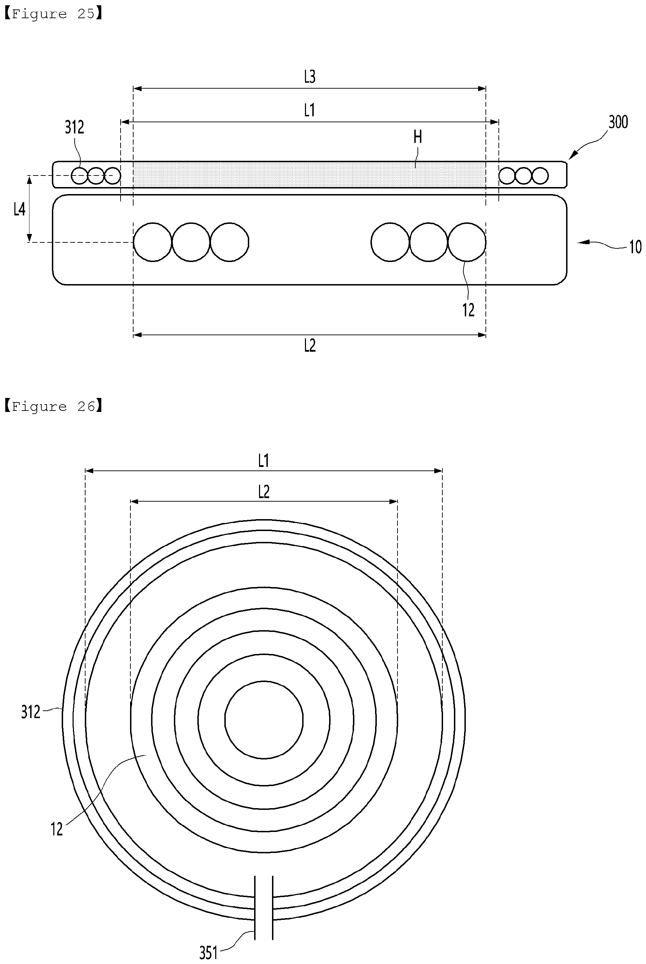

The cooktop 10 may include a working coil 12 and an upper plate glass 11. A heating region (see H of FIG. 25) through which the magnetic field generated in the working coil 12 passes may be formed on the upper plate glass 11. The shield device 300 may be used in the cooktop 10 and may include a shield coil (see 312 of FIG. 23) configured to generate a magnetic field that cancels the magnetic field generated in the working coil 12.

FIG. 23 is a view illustrating an induction heating type cooktop system according to a second embodiment of the present disclosure.

As illustrated in FIG. 23, the induction heating type cooktop system according to an embodiment of the present disclosure may include a cooktop 10 and a shield device 300 placed on the cooktop 10. The cooktop 10 may include a case 10a that protects elements such as the working coil 12. The upper portion of the case 10a may be the upper plate glass 11.

The shield device 300 may include a case 300a disposed on the cooktop 10 and a shield coil 312 disposed inside the case 300a.

The shield coil 312 may be made of a PCB, an FPCB, a single copper wire, a Litz-wire, or a stamp coil.

The case 300a may be made of silicone.

The cooking container 1 may be heated in a state of being placed directly on the cooktop 10. Alternatively, as illustrated in FIG. 23, when the shield device 300 is placed on the cooktop 10, the cooking container 1 may be heated in a state of being placed on the shield device 300.

When a current flows through the working coil 12, a first magnetic field 20 may be generated, and the first magnetic field 20 generates an eddy current in the cooking container 1, thereby heating the cooking container 1. On the other hand, at least a portion of the first magnetic field 20 generated in the working coil 12 may not pass through the cooking container 1 and may be exposed to the outside of the cooktop 10.

On the other hand, when a current flows through the working coil 12 and an electromotive force induced in the shield coil 312 is generated, a voltage is generated in a direction to cancel out the electromotive force in accordance with Lenz's law. That is, in the shield coil 312, the electromotive force is induced as the current flows through the working coil 12, and a voltage may be generated in a direction to cancel out the electromotive force. Accordingly, the shield coil 312 may generate a voltage without being connected to a separate battery or power source, and the second magnetic field 320 generated by such a voltage may cancel out the first magnetic field generated in the working coil 12.

In this way, as the first magnetic field 20 exposed to the outside of the cooktop 10 is canceled out by the second magnetic field 320 generated in the shield coil 312, the problem of human exposure to electromagnetic waves can be reduced.

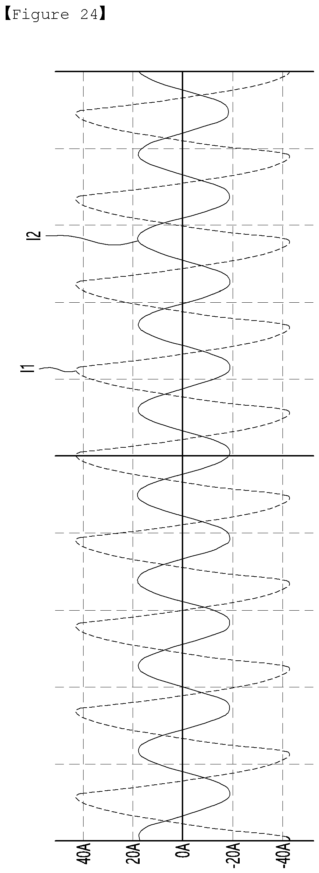

FIG. 24 is a graph showing currents flowing through a working coil and a shield coil according to the second embodiment of the present disclosure.

A first current I1 illustrated in FIG. 24 may represent a current flowing through the working coil 12. The current is applied to the working coil 12 by the switch of the inverter 140, and in the example of FIG. 24, the first current I1 may be about 43A.

On the other hand, as described above, the current may be induced in the shield coil 312 in a direction to cancel out the first magnetic field 20 generated in the working coil 12. Accordingly, a second current I2 having a phase difference of 180° from the first current I1 may be induced. The second current I2 may be about 17A.

As such, as the second current I2 is induced in the shield coil 312, when the second magnetic field 320 is generated, the first magnetic field 20 may be canceled out to reduce the magnetic field exposed to the outside of the cooktop 10.

[Table 1] below shows the result of measuring the magnetic field strength at distances of 0.0, 10.0, 20.0, 30.0, 40.0, and 50.0 [mm] from the cooktop 10 when the cooktop 10 operates alone.

[Table 1]

| Distance from cooktop [mm] | 0.0 | 10.0 | 20.0 | 30.0 | 40.0 | 50.0 |
|---|---|---|---|---|---|---|
| Magnetic field measurement value [uT] | 8.68 | 6.80 | 5.31 | 3.99 | 3.29 | 2.54 |

On the other hand, [Table 2] below shows the result of measuring the magnetic field strength at distances of 0.0, 10.0, 20.0, 30.0, 40.0, and 50.0 [mm] from the cooktop 10 when the cooktop 10 operates with the shield device 300 placed thereon,

[Table 2]

| Distance from cooktop [mm] | 0.0 | 10.0 | 20.0 | 30.0 | 40.0 | 50.0 |
|---|---|---|---|---|---|---|
| Magnetic field measurement value [uT] | 2.79 | 2.10 | 1.60 | 1.45 | 0.98 | 0.86 |

Comparing [Table 1] with [Table 2], it can be confirmed that, when the shield device 300 is used when the cooktop 10 operates alone, there is a magnetic field reduction effect at a rate of 67.86, 69.12, 69.87, 63.66, 70.21, and 66.14 [%] when the distance from the cooktop 10 is 0.0, 10.0, 20.0, 30.0, 40.0, and 50.0 [mm].

Next, the working coil and the shield coil of the cooktop system according to an embodiment of the present disclosure will be described in more detail with reference to FIGS. 25 and 26.

FIG. 25 is a cross-sectional view of a cooktop and a shield device according to the second embodiment of the present disclosure, and FIG. 26 is a plan view separately illustrating only a working coil and a shield coil in FIG. 25.

In particular, for convenience of explanation, FIG. 25 illustrates only a cooktop 10, a working coil 12 disposed inside the cooktop 10, a shield device 300, and a shield coil 312 disposed inside the shield device 300.

Both the working coil 12 and the shield coil 312 may be wound in a circular shape. Accordingly, the inner diameter of the shield coil 312 may refer to the diameter of the innermost coil, and the outer diameter of the working coil 12 may refer to the diameter of the outermost coil.

Referring to FIG. 25, the inner diameter L1 of the shield coil 312 may be greater than or equal to the outer diameter L2 of the working coil 12. That is, the inner diameter L1 of the shield coil 312 may be greater than or equal to the outer diameter L2 of the working coil 12. That is, the working coil 12 may be disposed inside the shield coil 312.

In a case where the shield coil 312 is disposed inside the working coil 12, although at least a portion of the first magnetic field 20 generated in the working coil 12 has to pass through the cooking container 1, at least a portion of the first magnetic field 20 first encounters the second magnetic field 320 generated in the shield coil 312 and is canceled out. This may cause problems with reduced heating efficiency.

However, as illustrated in FIG. 25, when the working coil 12 is disposed inside the shield coil 312, most of the first magnetic field 20 generated in the working coil 12 may pass through the cooking container 1 located in the heating region H. When the cooking container 1 is smaller than the heating region H or is disposed outside the heating region H, the first magnetic field 20 exposed to the outside may be canceled out by the second magnetic field 320 generated in the shield coil 312.

On the other hand, the heating region H may represent a region through which the first magnetic field 20 generated in the working coil 12 passes.

The inner diameter L1 of the shield coil 312 may be greater than or equal to the diameter L3 of the heating region H of the cooktop 10. That is, the inner diameter L1 of the shield coil 312 may be greater than or equal to the diameter L3 of the heating region H.

Accordingly, the second magnetic field 320 generated in the shield coil 312 passes through the heating region H, but does not pass through the cooking container 1, and thus, may be canceled out by encountering the exposed first magnetic field 20.

The working coil 12 and the shield coil 312 may not overlap each other in the vertical direction.

As described above, when the inner diameter L1 of the shield coil 312 is greater than or equal to the outer diameter L2 of the working coil 12, or when the inner diameter L1 of the shield coil 312 is greater than or equal to the diameter L3 of the heating region H, the first magnetic field 20 is focused on the cooking container 1, and simultaneously, the first magnetic field 20 exposed without passing through the cooking container 1 is canceled out with the second magnetic field 320. Accordingly, there is an advantage of minimizing reduction in heating efficiency and minimizing magnetic field exposure problems.

In some embodiments, as illustrated in FIG. 26, a shield capacitor 351 may be further connected to the shield coil 312. Specifically, in some embodiments, the shield device 300 may further include an energy accumulation circuit having the shield capacitor 351 connected to the shield coil 312.

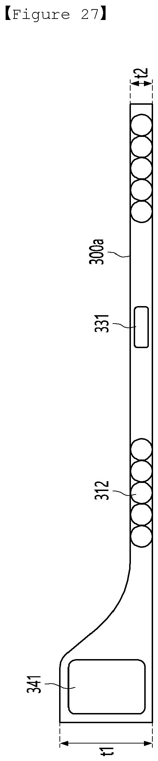

FIG. 27 is a cross-sectional view illustrating a shield device further including an energy accumulation circuit according to the second embodiment of the present disclosure.

In some embodiments, the shield device 300 may further include an energy accumulation circuit 341, and the energy accumulation circuit 341 may include the shield capacitor 351 for storing energy. The energy accumulation circuit 341 will be described in detail with reference to FIG. 26.

In the case 300a, the first thickness t1 of the region where the energy accumulation circuit 341 is disposed may be greater than the second thickness t2 of the region where the shield coil 312 is disposed.

This makes a gap (see L4 of FIG. 25) between the working coil 12 and the shield coil 312, and the gap L4 increases as the thickness of the case 300a of the shield device 300 increases. On the other hand, as the gap L4 increases, the heating efficiency of the working coil 12 may decrease. Accordingly, it is preferable that the gap L4 is minimized. Therefore, in order to minimize the decrease in heating efficiency of the working coil 12, it is desirable that the second thickness t2 is minimized. However, the energy accumulation circuit 341 includes at least one component for energy storage, and the component may increase the thickness. Accordingly, the energy accumulation circuit 341 may be spaced apart from the shield coil 312, and the first thickness t1 of the region where the energy accumulation circuit 341 is disposed may be different from the second thickness t2.

For example, the thickness of the shield coil 312 may be 210 mm and may be wound 7 turns, but this is only an example. When the thickness of the shield coil 312 is 210 mm, the gap L4 may be 8 mm.

The energy accumulation circuit 341 may be formed in the shield device 300 so as to be disposed in a position that does not overlap the heating region H in the vertical direction.

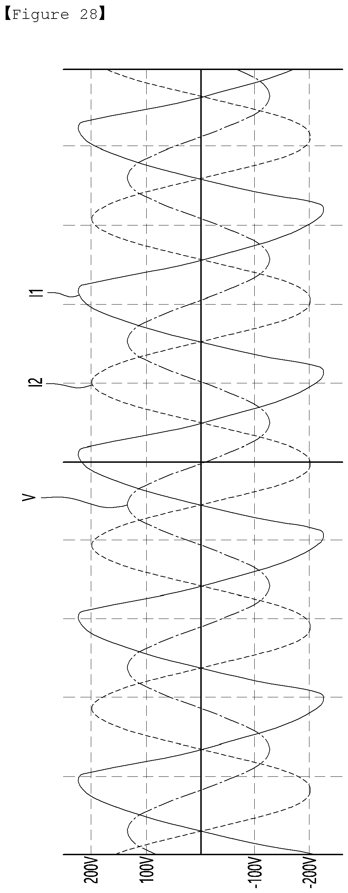

FIG. 28 is a graph showing voltage of the shield capacitor and current flowing through the working coil and the shield coil according to the second embodiment of the present disclosure.

In FIG. 28, the voltage V may represent the voltage of the shield capacitor 351, the first current I1 may represent the current flowing through the working coil 12, and the second current I2 may represent the current flowing through the shield coil 312.

When the first current I1 flows through the working coil 12, the second current I2 whose phase is opposite to that of the first current I1 may be induced in the shield coil 312. As the current flows through the shield coil 312, the energy insulated at both ends of the shield capacitor 351 connected to the shield coil 312 may be charged and discharged. Energy may be stored by rectifying the voltage (e.g., a sine wave of about 60 Hz).

Accordingly, in some embodiments, the shield device 300 according to an embodiment of the present disclosure may include an energy accumulation circuit.

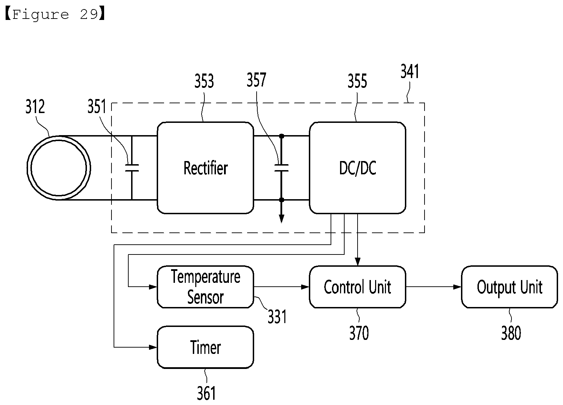

FIG. 29 is a view illustrating an energy accumulation circuit in detail according to the second embodiment of the present disclosure.

Referring to FIG. 29, the shield device 300 may include at least part or all of a shield coil 312, an energy accumulation circuit 341, a temperature sensor 331, a timer 361, a control unit 370, and an output unit 380.

The energy accumulation circuit 341 may include at least some or all of a shield capacitor 351, a rectifier 353, a DC link capacitor 357, and a DC/DC converter 355.

Energy may be stored in the shield capacitor 351. As current flows through the shield coil 312 at both ends of the shield capacitor 351, insulated energy may be charged and discharged. The energy stored in the shield capacitor 251 may be rectified, converted to a predetermined size, and then supplied to other components. The energy stored in the shield capacitor 251 may be an energy source for other components.

The rectifier 353 may rectify the energy stored in the shield capacitor 251. The rectifier 353 may convert power stored in the shield capacitor 251 into DC power.

The DC link capacitor 357 may serve as a buffer between the shield capacitor 251 and the DC/DC converter 355. The DC link capacitor 357 can maintain the voltage supplied from the shield capacitor 251 to the DC/DC converter 355 constant.

The DC/DC converter 355 can boost or lower the voltage rectified and supplied from the rectifier 353. The DC/DC converter 355 may output voltage by adjusting the magnitude of the voltage so as to be suitable for each component.

The energy accumulation circuit 341 may supply power to components within the cooktop 10, such as the temperature sensor 331, the timer 361, the control unit 370, or the output unit 380. Accordingly, the shield device 300 has an advantage of not requiring a separate battery.

On the other hand, in some embodiments, the shield device 300 may include a battery instead of the energy storage circuit 341. In this case, the shield device 300 may operate alone regardless of whether the cooktop 10 is operating..

At least one of the components provided in the cooktop 10, such as the temperature sensor 331, the timer 361, the control unit 370, or the output unit 380, may be operated by receiving power from the energy accumulation circuit 341. That is, at least one of the components provided in the cooktop 10, such as the temperature sensor 331, the timer 361, the control unit 370, or the output unit 380, may be driven by using energy stored as current is induced in the shield coil 312.

The temperature sensor 331 may detect the temperature of the cooking container 1. The temperature sensor 331 may detect the temperature of the cooking container heated by the cooktop 10 using the power stored in the energy storage circuit 341.

The temperature sensor 331 may be disposed inside the shield coil 312. According to an embodiment, as illustrated in the example of FIG. 27, the temperature sensor 331 may be provided in the center of the shield device 300.

When the shield device 300 is disposed on the upper portion of the cooktop 10, the temperature sensor provided on the cooktop 10 may have reduced accuracy in detecting the temperature of the cooking container 1. Accordingly, the temperature sensor 331 of the shield device 300 may detect the temperature of the cooking container 1.

The timer 361 may count the cooking time. That is, the timer 361 may count the cooking time of the cooktop 10 by using the power stored in the energy accumulation circuit 341.

Alternatively, the timer 361 may determine whether a set time has been reached. That is, the timer 361 may count the set time by using the power stored in the energy accumulation circuit 341 and determine whether the set time has been reached.

The control unit 370 may control the temperature sensor 331, the energy accumulation circuit 341, the timer 361, and the output unit 380.

The control unit 370 may output information to the output unit 380 based on the outputs of the temperature sensor 331 and the timer 361. For example, the control unit 370 may control the output unit 380 to display the temperature of the cooking container 1 detected by the temperature sensor 331. The control unit 370 may control the output unit 380 to display the cooking time counted by the timer 361. The control unit 370 may control the output unit 380 to output a notification visually or audibly when it is detected through the timer 361 that the set time has been reached.

The output unit 380 may output information related to the cooktop 10 by using the power stored in the energy storage circuit 341.

The output unit 380 may include at least one of a display that displays information visually or a speaker that outputs information audibly.

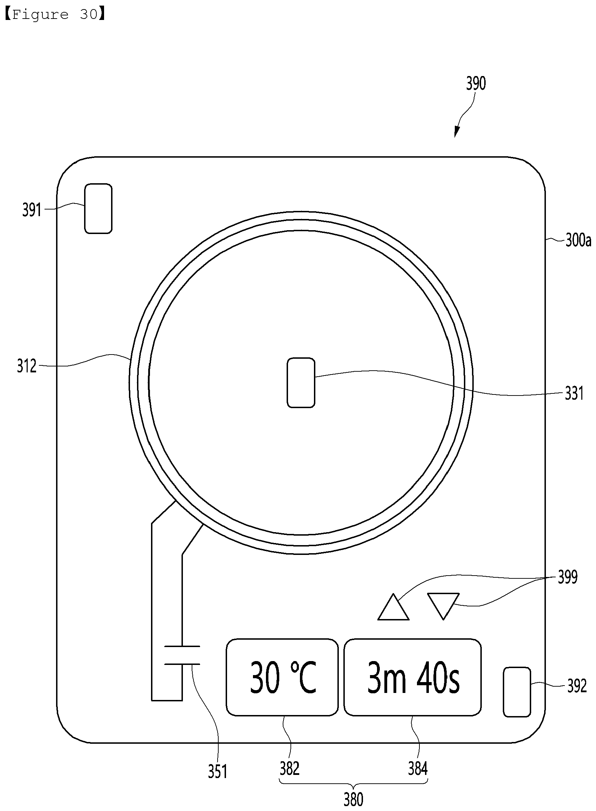

In addition, although not illustrated in FIG. 29, the shield device 300 may further include an input unit (see 399 of FIG. 30).

That is, the configuration of FIG. 29 and the input unit 399 are only an example, and the shield device 300 may further include other components according to embodiments.

FIG. 30 is a view illustrating the configuration of the shield device according to the second embodiment of the present disclosure.

The shield coil 312 and the shield capacitor 351 may be disposed inside the case 300a, and at least a portion of the temperature sensor 331, the output unit 380, the guides 391 and 392, and the input unit 399 may be exposed to the outside of the case 300a. All of the above-described components are illustrated in FIG. 30, but this is only for convenience of explanation, and it is reasonable that the components are not limited thereto.

The shield coil 312 may be larger than the heating region. The shield coil 312 may be located outside the heating region.

The temperature sensor 331 may be disposed at the center of the shield coil 312.

The shield capacitor 351 may be connected to the shield coil 312. The shield capacitor 351 may supply power to the temperature sensor 331, the output unit 380, or the input unit 399.

The output unit 380 may display information. In some embodiments, two or more output units 380 may be provided. For example, the output unit 380 may include a first output unit 382 that displays information output from the temperature sensor 331, and a second output unit 384 that displays information output from the timer 361.

The input unit 399 may receive the time to be counted by the timer 361.

Guides 391 and 392 may be formed in the case 300a to guide the position of the shield device 300. The guides 391 and 392 may guide the position at which the shield device 300 will be disposed.

According to an embodiment, the guides 391 and 392 may include a first guide 391 and a second guide 392. The first guide 391 and the second guide 392 may be disposed at the vertices of the shield device 300 to face each other in the diagonal direction. However, such positions are only an example.

The guides 391 and 392 may be formed so that the center of the shield coil 312 coincides with the center of the working coil 12 in the vertical direction, and in this case, the electromagnetic wave reduction efficiency may be maximized.

The two guides 391 and 392 are illustrated in FIG. 30, but this is only an example, and it is reasonable that the guides are not limited thereto.

According to an embodiment, a ferromagnetic body such as iron may be disposed on the upper plate glass 11 of the cooktop 10. That is, when the guides 391 and 392 including magnets are formed in one region of the shield device 300 and the shield device 300 is optimally disposed on the upper plate glass 11 of the cooktop 10, the ferromagnetic body may be disposed at a position that overlaps the guides 391 and 392 in the vertical direction.

Accordingly, when the shield device 300 is used, the user may easily place the shield device 300 by finding a position around the upper plate glass 11 of the cooktop 10 where the shield device 300 is attracted by magnetism. Accordingly, there is an advantage that the user can easily find the optimal position for reducing electromagnetic waves of the shield device 300.

On the other hand, the shield device 300 according to an embodiment of the present disclosure may be used in any cooktop 10 regardless of the guides 391 and 392. Additionally, the shield device 300 may be arbitrarily used in at least one crater provided on the cooktop 10.

According to an embodiment of the present disclosure, since there is no need to separately provide the shield coil inside the cooktop 10, there is no need to increase the manufacturing costs or volume of the cooktop 10, and thus, there is an advantage of being applicable to the previously manufactured cooktop 10.

The above description is merely illustrative of the technical idea of the present disclosure, and various modifications and changes may be made thereto by those skilled in the art without departing from the essential characteristics of the present disclosure.

Therefore, the embodiments of the present disclosure are not intended to limit the technical spirit of the present disclosure but to illustrate the technical idea of the present disclosure, and the technical spirit of the present disclosure is not limited by these embodiments.

The scope of protection of the present disclosure should be interpreted by the appending claims, and all technical ideas within the scope of equivalents should be construed as falling within the scope of the present disclosure.

**Claims**

1. An induction heating type cooktop comprising:

   an upper plate glass having a heating region formed so as to heat a cooking container;
   a working coil configured to generate a first magnetic field to heat the cooking container;
   an inverter comprising a switching element driven to allow a current to flow through the working coil; and
   a shield circuit configured to generate a second magnetic field to cancel out the first magnetic field.

2. The induction heating type cooktop of claim 1, wherein the shield circuit comprises a shield coil and a shield capacitor.

3. The induction heating type cooktop of claim 2, wherein the shield circuit further comprises a first switch configured to determine whether to operate in an electromagnetic wave reduction mode.

4. The induction heating type cooktop of claim 3, wherein the first switch is turned on or off at the zero crossing point.

5. The induction heating type cooktop of claim 2, wherein the shield circuit further comprises:

   a second switch configured to determine whether to operate a heating power reinforcement mode, and

a heating power reinforcement capacitor.

6. The induction heating type cooktop of claim 5, wherein the shield capacitor and the heating power reinforcement capacitor are connected in parallel, and
   wherein the second switch is connected between the shield capacitor and the heating power reinforcement capacitor.

7. The induction heating type cooktop of claim 6, wherein the second switch is turned off in the heating power enhancement mode and is turned on in an electromagnetic wave reduction mode.

8. The induction heating type cooktop of claim 5, wherein the second switch is turned off when a size of the cooking container is larger than a preset reference size, and
   wherein the second switch is turned on when the size of the cooking container is smaller than the reference size.

9. The induction heating type cooktop of claim 8, further comprising an output unit configured to output a notification when the size of the cooking container is smaller than or equal to the reference size and the cooking container is not aligned to the heating region.

10. A shield device used in an induction heating type cooktop including a working coil, the shield device comprising:

    a case disposed on an upper portion the cooktop; and
    a shield coil disposed inside the case.

11. An induction heating type cooktop system comprising:

    a cooktop comprising a working coil and an upper plate glass having a heating region through which a magnetic field generated in the working coil passes; and
    a shield device disposed on the cooktop,
    wherein the shield device comprises:

    a case disposed on an upper portion the cooktop; and
    a shield coil disposed inside the case.

12. The induction heating type cooktop system of claim 11, wherein an inner diameter of the shield coil is larger than an outer diameter of the working coil.

13. The induction heating type cooktop system of claim 11, wherein an inner diameter of the shield coil is larger than a diameter of the heating region of the cooktop.

14. The induction heating type cooktop system of claim 11, wherein the case is provided with a guide configured to guide a position of the shield device.

15. The induction heating type cooktop system of claim 11, wherein the shield device further comprises an energy accumulation circuit having a shield capacitor connected to the shield coil.

【Figure 1】

【Figure 2】

【Figure 3】

【Figure 4】

【Figure 5】

(a)

(b)

【Figure 6】

【Figure 7】

【Figure 8】

180° Current Phase Difference

Coil Current [A]

———— Working Coil
— — — Shield Coil

【Figure 9】

(a)

(b)

B[tesla]
0.0070
0.0065
0.0061
0.0058
0.0052
0.0047
0.0042
0.0038
0.0033
0.0028
0.0024
0.0019
0.0015
0.0010
0.0005
0.0001

【Figure 10】

【Figure 11】

Electromagnetic Wave Reduction Period

t1    t2

【Figure 12】

【Figure 13】

(a)

Heating Power Reinforcement Mode Path

(b)

Electromagnetic Wave Reduction Mode Path

【Figure 14】

【Figure 15】

【Figure 16】

| | Working Coil Voltage |
|---|---|
| No Cooking Container | Vtx_coil_pulse |
| | Shield Coil Voltage |
| | Vsh_pulse |

【Figure 17】

| Small Cooking Container (Align) | Working Coil Voltage |
| | Vtx_coil_pulse chart |
| | Shield Coil Voltage |
| | Vsh_pulse chart |

Working Coil Voltage — Vtx_coil_pulse

Shield Coil Voltage — Vsh_pulse

【Figure 18】

| | Working Coil Voltage |
| --- | --- |
| Small Cooking Container (Misalign) | Vtx_coil_pulse |
| | Shield Coil Voltage |
| | Vsh_pulse |

【Figure 19】

| | Working Coil Voltage |
|---|---|
| Large Cooking Container (Align) | Vtx_coil_pulse<br> |
| | Shield Coil Voltage |
| | Vsh_pulse<br>유도 전압이 매우 낮음 |

[Figure 20]

Comparison of Heating Efficiency for Small Container According to Presence Or Absence of Shield Coil

Lower Magnetic Field Distribution of Pot

During Existing IH Operation
(Working Coil Input Current 57A)

(a)

During 180° Phase Shield Coil Operation
(Working Coil 57A, Shield Coil 35A)

(b)

Comparison of Heating Efficiency for Large Container
According to Presence Or Absence of Shield Coil

B[tesla]
0.0200
0.0187
0.0173
0.0160
0.0147
0.0133
0.0120
0.0107
0.0093
0.0080
0.0067
0.0053
0.0040
0.0027
0.0013
0.0000

During Existing IH Operation
(Working Coil Input Current 57A)

(a)

During 180° Phase Shield Coil Operation
(Working Coil 57A, Shield Coil 35A)

(b)

During 0° Phase Shield Coil Operation
(Working Coil 57A, Shield Coil 57A)

(c)

[Figure 21]

[Figure 22]

EP 4 373 212 A1

<Coil+Ferrite>

<Coil+Ferrite+쉴드코일>

Full model
<Coil+Ferrite+Aluminum>

── Coil+Ferrite  ─ ─ Coil+Ferrite+Shield Coil ----- Full model

【Figure 23】

【Figure 24】

【Figure 25】

【Figure 26】

【Figure 27】

【Figure 28】

【Figure 29】

【Figure 30】

## INTERNATIONAL SEARCH REPORT

| | International application No. |
|---|---|
| | **PCT/KR2022/009961** |

**A. CLASSIFICATION OF SUBJECT MATTER**

**H05B 6/12**(2006.01)i; **H05B 6/06**(2006.01)i

According to International Patent Classification (IPC) or to both national classification and IPC

**B. FIELDS SEARCHED**

Minimum documentation searched (classification system followed by classification symbols)

H05B 6/12(2006.01); H05B 6/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 쉴드(shield), 유도가열(inductive heat), 쿡탑(cooktop), 코일(coil), 상쇄(cancel), 정렬(align)

**C. DOCUMENTS CONSIDERED TO BE RELEVANT**

| Category* | Citation of document, with indication, where appropriate, of the relevant passages | Relevant to claim No. |
|---|---|---|
| X<br>Y | US 2011-0100980 A1 (KITAIZUMI, Takeshi et al.) 05 May 2011 (2011-05-05)<br>See paragraphs [0114]-[0115]; claim 14; and figure 5A. | 1-2,10-15<br>3-9 |
| Y | KR 10-2020-0075551 A (SHINWHASELECS CO., LTD.) 26 June 2020 (2020-06-26)<br>See paragraph [0031]; claims 1 and 4; and figures 4-5. | 3-9 |
| Y | JP 2000-182762 A (DAIUN K.K.) 30 June 2000 (2000-06-30)<br>See claim 6. | 9 |
| A | WO 2019-239557 A1 (MITSUBISHI ELECTRIC CORPORATION) 19 December 2019 (2019-12-19)<br>See claims 1-3; and figures 26-28. | 1-15 |
| A | US 2011-0073588 A1 (KUSAKA, Takaaki et al.) 31 March 2011 (2011-03-31)<br>See paragraphs [0050]-[0053]; and figure 4. | 1-15 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 October 2022** | **06 October 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/009961**

| Patent document cited in search report | | | Publication date (day/month/year) | Patent family member(s) | | | Publication date (day/month/year) |
|---|---|---|---|---|---|---|---|
| US | 2011-0100980 | A1 | 05 May 2011 | CN | 102077685 | A | 25 May 2011 |
| | | | | CN | 102077685 | B | 19 March 2014 |
| | | | | EP | 2408262 | A1 | 18 January 2012 |
| | | | | EP | 2408262 | A4 | 28 January 2015 |
| | | | | EP | 2408262 | B1 | 05 June 2019 |
| | | | | JP | 2012-103766 | A1 | 13 September 2012 |
| | | | | JP | 5313334 | B2 | 09 October 2013 |
| | | | | US | 8878108 | B2 | 04 November 2014 |
| | | | | WO | 2010-103766 | A1 | 16 September 2010 |
| KR | 10-2020-0075551 | A | 26 June 2020 | KR | 10-2131357 | B1 | 07 July 2020 |
| JP | 2000-182762 | A | 30 June 2000 | None | | | |
| WO | 2019-239557 | A1 | 19 December 2019 | CN | 112352468 | A | 09 February 2021 |
| | | | | EP | 3809801 | A1 | 21 April 2021 |
| | | | | EP | 3809801 | A4 | 16 June 2021 |
| | | | | EP | 3809801 | B1 | 16 February 2022 |
| | | | | JP | 2021-239557 | A1 | 01 April 2021 |
| | | | | JP | 7038812 | B2 | 18 March 2022 |
| | | | | US | 2021-0243853 | A1 | 05 August 2021 |
| US | 2011-0073588 | A1 | 31 March 2011 | CN | 102037781 | A | 27 April 2011 |
| | | | | CN | 102037781 | B | 02 October 2013 |
| | | | | EP | 2288231 | A1 | 23 February 2011 |
| | | | | EP | 2288231 | A4 | 26 February 2014 |
| | | | | EP | 2288231 | B1 | 08 August 2018 |
| | | | | US | 8853599 | B2 | 07 October 2014 |
| | | | | WO | 2009-144916 | A1 | 03 December 2009 |

Form PCT/ISA/210 (patent family annex) (July 2022)